# EUROPEAN PATENT APPLICATION

(11) **EP 3 473 468 A1**
(43) Date of publication of application: **24.04.2019**
(21) Application number: 17198451.1
(22) Date of filing: 26.10.2017
(51) Int. Cl.: B60K 17/00, B60K 17/06, B60K 17/08, B60K 17/16, B60K 17/35, F16H 3/16

(54) **POWER TRAIN SYSTEM AND VEHICLE INCLUDING THE SAME**

(30) Priority: 20.10.2017 KR 20170136874
(71) Applicant: Infinitrans Alpha Co., Ltd., Incheon 21984 (KR)
(72) Inventor: HAN, Seung Woo, Yeonsu-gu Incheon 21982 (KR)
(74) Representative: Vossius & Partner Patentanwälte Rechtsanwälte mbB

(57) **Abstract**

There are provided a power train system and a vehicle including the same. The power train system may include: a first transmission unit and a second transmission. The second transmission unit may include: an axle output unit having an axle shaft disposed in a side-to-side direction so as to be connected to left and right wheels; and an axle input unit having two or more shafts separated from an axle shaft of the axle output unit, receiving the driving power from a bevel gear part forming a bevel gear rotating shaft installed in a longitudinal direction of a vehicle body in order to supply the driving power switched to the forward or reverse driving power by the first transmission unit, and changing the received driving power to a specific speed among the four rotation speeds. The power train system can not only improve a degree of freedom in design, but also achieve multiple speeds.

## Description

### CROSS-REFERENCE TO RELATED APPLICATION(S)

This application claims benefit of priority to Korean Patent Application No. 10-2017-0136874 filed on October 20, 2017 in the Korean Intellectual Property Office, the disclosure of which is incorporated herein by reference in its entirety.

### BACKGROUND

### 1. FIELD

The present disclosure relates to a power train system and a vehicle including the same.

### 2. DESCRIPTION OF RELATED ART

As is generally known, a power train system of a vehicle includes a power generator for generating a driving power, a power converter for converting the torque and speed of the driving power generated by the power generator, and a power transfer unit for transferring the driving power, of which the output torque and speed are converted by the power converter, to a plurality of wheels.

The power generator may be installed in an internal combustion engine based on the combustion of fossil fuel, a motor engine based on the supply of electric force, a hybrid engine having an internal combustion engine and motor engine combined therein, and other types of motors.

The power converter generally includes a torque converter for converts the torque of a driving power outputted from the power generator and a transmission for changing a rotation speed.

The power transfer unit includes a differential gear and an axle shaft. The differential gear receives the driving power of which the output torque and speed are converted by the power converter, and the axle shaft transfers the driving power distributed by the differential gear to left and right wheels.

In general, a clutch system is further installed between the power generator and the power converter. Theoretically, the clutch system may be installed between the power generator and the power converter as described above, installed between the power converter and the power transfer unit, or installed between the power transfer unit and the left and right wheels which finally receive the driving power.

The clutch system may be disposed between parts which transfer and receive a driving power, in order to temporally block a transfer of the driving power. Therefore, the clutch system allows a vehicle to smoothly repeat stopping and running, without stopping the power generator.

In the case of a commercial vehicle, the clutch system may be installed to interrupt power between the power generator and the power converter, in order to minimize the consumption of energy generated by the power generator.

However, the position of the clutch system does not need to be limited. In many cases, the position of the clutch system may be changed depending on the types and features of vehicles to which the clutch system is applied. That is, a commercial vehicle and a heavy equipment vehicle used for a special operation are different from each other in terms of a required torque and required driving speed. Therefore, since each of the vehicles has significantly different driving efficiency and operation efficiency depending on the characteristics thereof, the structures of the power generator, the power converter and the power transfer unit need to be changed and designed according to the characteristics of each vehicle.

Depending on the characteristics of each vehicle, the design change of the power generator, the power converter and the power transfer unit is conducted in a different manner. Therefore, the power generator, the power converter and the power transfer unit are inevitably designed by a plurality of manufacturers, which makes it difficult to design an integration structure.

Recently, the above-described power train system of a general vehicle is just applied to a heavy equipment vehicle such as a forklift truck. Korean Patent Registration No. 10-0425277, which had been filed by the present applicant and registered in the Korean Intellectual Property Office, is a representative example.

The system according to the patent document has been devised to not only minimize noise and vibration of an engine, which may occur when a power train system of a general vehicle is applied to a heavy equipment vehicle such as a forklift truck, but also minimize the turning radius of a heavy equipment vehicle. According to the patent document, a transmission and clutch system may be integrated in an axle hub of an axle shaft in order to improve braking performance, and the design of engine mounting and axle mounting may be facilitated through a compact structure.

However, when the transmission and the clutch system are integrated in the left and right axle shafts having different gears installed therein, the load may be concentrated. In this case, the structure must have a strong housing to protect the respective components, and the engagement between gears must be performed with precision. Thus, the manufacturing cost is significantly increased.

Furthermore, since the bevel gear is directly engaged with the beveling gear installed on the differential gear, the whole length of the power train system including the propeller shaft is increased to limit the degree of freedom in structure design.

### SUMMARY

An object of the present disclosure is to provide a power train system which is capable of improving the entire degree of freedom in design for a power transfer structure, and a vehicle including the same.

An object of the present disclosure is to provide a power train system which is capable of performing a multi-stage speed change including two or four speeds, even when being applied to a heavy equipment vehicle, and a vehicle including the same.

An object of the present disclosure is to provide a power train system which is capable of partially removing a torque converter for increasing an output torque, and a vehicle including the same.

According to an embodiment of the present disclosure, a power train system may include: a first transmission unit including a forward/reverse output unit which switches a driving power outputted from a power generator to any one of a forward driving power and a reverse driving power; and a second transmission unit changing the forward or reverse driving power received from the first transmission unit to a specific speed among at least four rotation speeds. The second transmission unit may include: an axle output unit having an axle shaft disposed in a side-to-side direction so as to be connected to left and right wheels; and an axle input unit having two or more shafts separated from an axle shaft of the axle output unit, receiving the driving power from a bevel gear part forming a bevel gear rotating shaft installed in a longitudinal direction of a vehicle body in order to supply the driving power switched to the forward or reverse driving power by the first transmission unit, and changing the received driving power to a specific speed among the four rotation speeds.

The axle input unit may include: a drive-side axle input unit having a multi-stage driving shaft which is connected to the bevel gear part, separated from the axle shaft, and installed in parallel to the axle shaft, changing the driving power inputted as any one of the forward and reverse driving powers to two specific speeds among the four rotation speeds, and selectively outputting one of the changed driving powers; and a driven-side axle input unit having a multi-stage driven shaft which is connected to the drive-side axle input unit, separated from the axle shaft and the multi-stage driving shaft, and installed in parallel to the axle shaft and the multi-stage driving shaft, changing the driving power inputted from the drive-side axle input unit to two specific speeds among the four rotation speeds, and selectively outputting one of the changed driving powers.

The axle shaft may include a left axle shaft connected to the left wheel of the left and right wheels and a right axle shaft connected to the right wheel of the left and right wheels, and the axle output unit may further include a differential gear part installed between the left and right axle shafts, and receiving the driving power changed by the drive-side or driven-side axle input unit.

The drive-side axle input unit may include one multi-stage clutch pack installed on the outer circumference of the multi-stage driving shaft, and selectively fixed to the multi-stage driving shaft to change the driving power to any one of the two specific speeds, depending on whether operation oil is supplied. The driven-side axle input unit may include the other multi-stage clutch pack installed on the outer circumference of the multi-stage driven shaft, and selectively fixed to the multi-stage driven shaft to change the driving power to any one of the two specific speeds, depending on whether operation oil is supplied.

The drive-side axle input unit may include one multi-stage clutch pack which is installed on the outer circumference of the multi-stage driving shaft, fixed to the multi-stage drive shaft to change the driving power to any one of the two specific speeds, depending on whether operation oil is supplied, and connected to the axle output unit. The driven-side axle input unit may include the other multi-stage clutch pack which is installed on the outer circumference of the multi-stage driven shaft, fixed to the multi-stage driven shaft to change the driving power to any one of the two specific speed, depending on whether operation oil is supplied, and connected to the axle output unit.

The multi-stage clutch pack may include a second speed drive gear connected to one side of the axle output unit and changing the driving power to a second rotation speed among the four rotation speeds, and a fourth speed drive gear connected to the other side of the axle output unit and changing the driving power to a fourth rotation speed among the four rotation speeds. The other multi-stage clutch pack may include a first speed drive gear connected to the one side of the axle output unit, to which the second speed drive gear is connected, and changing the driving power to a first rotation speed among the four rotation speeds, and a third speed drive gear connected to the other side of the axle output unit, to which the fourth speed drive gear is connected, and changing the driving power to a third rotation speed among the four rotation speeds.

The axle output unit may include a left differential gear case disposed closer to the left wheel between the left and right wheels and receiving the driving power from one side of the axle input unit, and a right differential gear case disposed closer to the right wheel between the left and right wheels and receiving the driving power from the other side of the axle input unit. The one multi-stage clutch pack may include a second speed drive gear engaged with one transfer gear installed in the right differential gear case and changing the driving power to a second rotation speed among the four rotation speeds, and a fourth speed drive gear engaged with the other transfer gear installed in the left differential gear case and changing the driving power to a fourth rotation speed among the four rotation speeds. The other multi-stage clutch pack may include a first speed drive gear engaged with the one transfer gear and changing the driving power to a first rotation speed among the four rotation speeds, and a third speed drive gear engaged with the other transfer gear and changing the driving power to a third rotation speed among the four rotation speeds.

The power train system may further include an idler part connecting the drive-side axle input unit and the driven-side axle input unit to transfer the driving power.

The idler part may include an idle gear which is engaged with one connection gear rotated in connection with the multi-stage driving shaft and the other connection gear rotated in connection with the multi-stage driven shaft at the same time.

The idler part may include an idle gear rotated coaxially with the axle shaft of the axle output unit.

The idler part may include: an idler shaft separated from the axle shaft of the axle output unit and disposed in parallel to the multi-stage driving shaft and the multi-stage driven shaft; and an idle gear installed on the idler shaft, and engaged with one connection gear rotated in connection with the multi-stage driving shaft and the other connection gear rotated in connection with the multi-stage driven shaft at the same time.

The forward/reverse output unit of the first transmission unit may include: an output shaft directly connected to an output end of the power generator; and forward and reverse speed clutch parts disposed on the outer circumference of the output shaft, fixed to the output shaft depending on whether operation oil is supplied, and outputting the forward or reverse driving power while being rotated in connection with the output shaft.

The forward or reverse driving power of the first transmission unit may be transferred to the second transmission unit through a propeller shaft having the bevel gear part installed at a leading end thereof, and the first transmission unit may further include a compensation gear part disposed between the output shaft and the propeller shaft and serving as a medium through the forward or reverse driving power is transferred.

The forward or reverse driving power of the first transmission unit may be transferred to the second transmission unit through a propeller shaft formed at a leading end of the bevel gear part, and the output shaft and the propeller shaft may be directly connected to each other on one axis.

The multi-stage driving shaft may include a beveling gear engaged with a bevel gear installed in the bevel gear part, and an installation position of the beveling gear on the multi-stage driving shaft may be designed in a different manner when the first transmission unit further includes the compensation gear part or the output shaft and the propeller shaft are directly connected to each other on one axis.

The power train system may further include a reduction gear part installed at the front end of each of the left and right wheels, and increasing an output torque by reducing the driving power supplied from the axle output unit. When the reduction gear part includes a double planetary gear set, torque conversion may not be performed between the power generator and the front end of the forward/reverse output unit.

According to another embodiment of the present disclosure, there is provided a vehicle including a power train system. The power train system may include: a first transmission unit including a forward/reverse output unit which switches a driving power outputted from a power generator to any one of a forward driving power and a reverse driving power; and a second transmission unit changing the forward or reverse driving power received from the first transmission unit to a specific speed among at least four rotation speeds. The second transmission unit may include: an axle output unit having an axle shaft disposed in a side-to-side direction so as to be connected to left and right wheels; and an axle input unit having two or more shafts separated from an axle shaft of the axle output unit, receiving the driving power from a bevel gear part forming a bevel gear rotating shaft installed in a longitudinal direction of a vehicle body in order to supply the driving power switched to the forward or reverse driving power by the first transmission unit, and changing the received driving power to a specific speed among the four rotation speeds.

### BRIEF DESCRIPTION OF DRAWINGS

FIG. 1 is a schematic diagram illustrating a power train system and a vehicle including the same according to an embodiment of the present disclosure.
FIG. 2 is a perspective view illustrating an example of a second transmission unit II among components of the power train system and the vehicle including the same according to the embodiment of the present disclosure.
FIG. 3 is a front view of FIG. 2.
FIG. 4 is a cross-sectional view taken along the line A-A of FIG. 3.
FIG. 5 is a cross-sectional view taken along the line B-B of FIG. 3.
FIG. 6 is a cross-sectional view taken along the line C-C of FIG. 5.
FIG. 7 is a cross-sectional view taken along the line D-D of FIG. 5.
FIGS. 8A to 8D are side views illustrating operation effects of the power train system through the second transmission unit.
FIGS. 9A and 9C illustrates power transfer processes during a neutral mode, a forward driving mode and a reverse driving mode through the second transmission unit according to the example of FIG. 2.
FIG. 10 is a configuration diagram illustrating an example of a first transmission unit in the power train system and the vehicle including the same according to the embodiment of the present disclosure.
FIG. 11 is a configuration diagram illustrating another example of the second transmission in the power train system and the vehicle including the same according to the embodiment of the present disclosure.
FIGS. 12A to 12D are configuration diagrams illustrating power transfer processes by the second transmission unit according to the example of FIG. 11 during a first forward speed mode, a second forward speed mode, a first reverse speed mode and a second reverse speed mode in the power train system and the vehicle including the same according to the present embodiment.
FIG. 13 is a perspective view illustrating still another example of the second transmission unit in the power train system and the vehicle including the same according to the embodiment of the present disclosure.
FIG. 14 is a configuration diagram of FIG. 13.
FIGS. 15A to 15D are configuration diagrams illustrating power transfer processes during first to fourth forward speed modes.
FIG. 15E is a configuration diagram illustrating a power transfer process during a first reverse speed mode.
FIG. 16 illustrates a modification of the first transmission unit in the power train system and the vehicle including the same according to the embodiment of the present disclosure.

### DETAILED DESCRIPTION

Hereafter, a power train system, a vehicle including the same and a control method thereof according to embodiments of the present disclosure will be described in detail with reference to the accompanying drawings.

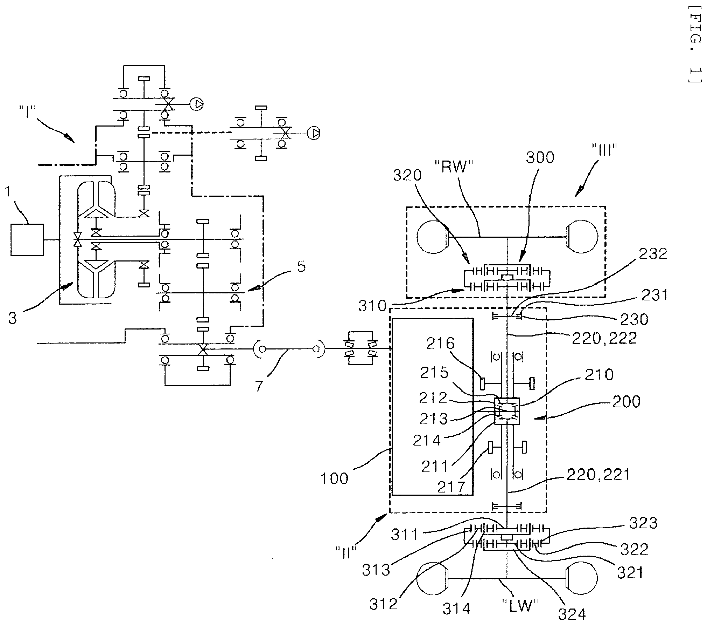

FIG. 1 is a schematic diagram illustrating a power train system and a vehicle including the same according to an embodiment of the present disclosure.

The power train system according to the embodiment of the present disclosure is applied to a vehicle. The vehicle includes all kinds of means of transportation which can be driven by a driving power generated through a driving source (power generator 1) such as an engine. For example, the vehicle may include a truck, van, sports-utility vehicle and heavy equipment vehicle as well as a general car.

FIG. 1 illustrates a rear-wheel-drive power train system, but the power train system according to the present embodiment may also include a front-wheel-drive power train system without departing the scope of the invention.

The driving source (power generator 1) which provides a driving power to be transferred through the power train system may include a conventional internal combustion engine, a motor engine M, a hybrid engine and other types of motors.

The power train system and the vehicle including the same according to the present embodiment relate to a power train system which receives power generated by a power generator 1, converts the torque of the received power through a torque converter 3, and transfers the torque-converted power to left and right wheels LW and RW through a bevel gear (with no reference numeral) installed at the leading end of a propeller shaft 7.

In general, a power generator is defined as a driving source to generate power, and a power converter refers to a part for converting the rotation speed or output torque of the generated power. In the power train system according to the present embodiment, however, the entire structure between the power generator 1 and the propeller shaft 7 is defined as 'first transmission unit I', and the entire structure between the propeller shaft 7 and a wheel driving unit III described later is defined as 'second transmission unit II', for convenience of description.

Although not illustrated, the first transmission unit I may be installed in a transmission housing and mounted on a vehicle body, and the second transmission unit II and the wheel driving unit III may be installed in an axle housing distinguished from the transmission housing, and integrated with the vehicle body.

As illustrated in FIG. 1, the power train system and the vehicle including the same according to the present embodiment may include an axle input unit 100 and an axle output unit 200. The axle input unit 100 may be connected to a bevel gear part forming a bevel gear rotating shaft installed in the longitudinal direction of the vehicle body so as to receive a driving power of the first transmission unit I, and selectively switch the received driving power to any one of a forward driving power and reverse driving power or change the received driving power through multiple speeds, and the axle output unit 200 may receive the driving power outputted from the axle input unit 100, and output the received driving power to the wheel driving units III connected to the left and right wheels LW and RW. The detailed structure of the axle input unit 100 will be described in detail later.

The axle output unit 200 serves to receive any one of the forward driving power and the reverse driving power from the axle input unit 100 or any one of the driving powers changed through multiple speeds, and transfer the received driving power to the wheel driving units III through a differential gear part 210.

Therefore, the axle output unit 200 may include the differential gear part 210, left and right axle shafts 221 and 222 extended from the differential gear part 210 to the left and right wheels LW and RW, and a brake part 230.

The differential gear part 210 may include a differential gear case part 211 and 212 formed by left and right differential gear cases 211 and 212 coupled to each other, differential pinion gears 218 having a pinion shaft 213 set to a rotating shaft thereof, the pinion shaft 213 being coupled to the differential gear case part 211 and 212, and differential side gears 214 and 215 which are engaged with the differential pinion gears 218 and finally connected to the axle shaft 220.

The left and right differential gear cases 211 and 212 may have left and right differential transfer gears 217 and 216 installed on the outer circumferential surfaces thereof, respectively, the left and right differential transfer gears 217 and 216 being formed in the shape of a spur gear.

The inner circumferential surface of the left differential gear case 211 forming the inside of the differential gear case part 211 and 212 is engaged with the outer surface of the left differential side gear 214 which is coupled to the leading end of the left axle shaft 221 inserted into the differential gear case part 211 and 212 through spline gear coupling.

The inner circumferential surface of the right differential gear case 212 forming the inside of the differential gear case part 211 and 212 is engaged with the outer surface of the right differential side gear 215 which is coupled to the leading end of the right axle shaft 222 inserted into the differential gear case part 211 and 212 through spline gear coupling.

The pinion shaft 213 of the differential pinion gears 218 is disposed perpendicular to the left and right axle shafts 221 and 222, and the differential pinion gears 218 installed at both ends of the pinion shaft 213 are engaged with the inner surfaces of the left and right differential side gears 214 and 215, respectively.

The power outputted by the differential gear part 210 may be transferred to the wheel driving units III formed at the left and right wheels LW and RW.

The wheel driving units III may include a left wheel driving unit III connected to the left wheel LW and a right wheel driving unit III connected to the right wheel RW. The power transferred from the differential gear part 210 rotates the left and right wheel driving units III in the same manner. Therefore, in the following descriptions, the left and right wheel driving units are not distinguished by the terms 'left' and 'right', but only the components of 'the wheel driving unit III' will be described in detail, for convenience of description.

The wheel driving unit III may include a brake part 230. At this time, any one of a dry brake and wet brake may be employed as the brake part 230, depending on a designer's selection. The present embodiment is based on the supposition that a wet brake is installed as the brake part.

As illustrated in FIG. 1, the wet brake part 230 may be disposed between the differential gear part 210 and the leading end of the left axle shaft 221 or between the differential gear part 210 and the leading end of the right axle shaft 222.

The wet brake part 230 may include a brake piston (not illustrated), a brake disk 232 and a pad 231. The brake piston may brake the axle shaft 220, and the brake disk 232 and the pad 231 may rub against each other through the brake piston. When the brake disk 232 and the pad 231 are pressed against each other, the axle shaft 220 and a sun gear 311 of a reduction gear part 300 integrated with the axle shaft 220 may be braked.

The reduction gear part 300 is installed at each of the leading ends of the left and right axle shafts 221 and 222.

In the power train system and the vehicle including the same according to the present embodiment, the reduction gear part 300 may be implemented with a double planetary gear set. That is, the double planetary gear set may include a first planetary gear set 310 disposed adjacent to the axle shaft 220 and a second planetary gear set 320 disposed adjacent to the left or right wheel LW or RW.

As illustrated in FIG. 1, the first planetary gear set 310 may include a first sun gear 311, a plurality of planetary gears 312, a first ring gear 313, and a first carrier 314. The first sun gear 311 is integrated with the leading end of the axle shaft 220, the plurality of planetary gears 312 are engaged with the first sun gear 311 and revolved and rotated according to a rotation operation of the first sun gear 311, the first ring gear 313 is fixed in the axle housing (with no reference numeral) so as to surround the plurality of first planetary gears 312, and has an inner circumferential surface engaged with the plurality of first planetary gears 312 at the same time, and the first carrier 314 is connected to the rotation centers of the plurality of first planetary gears 312, and rotated in the revolution direction of the plurality of first planetary gears 312.

The second planetary gear set 322 may include a second sun gear 321, a plurality of second planetary gears 322, a second ring gear 323, and a second carrier 324. The second sun gear 321 is coaxially connected to a rotating shaft of the first carrier 314, the plurality of planetary gears 322 are engaged with the second sun gear 321, and revolved and rotated according to a rotation operation of the second sun gear 321, the second ring gear 323 is fixed in the axle housing so as to surround the second planetary gears 322, and has an inner circumferential surface engaged with the plurality of second planetary gears 322 at the same time, and the second carrier 324 is connected to the rotation centers of the plurality of second planetary gears 322 and rotated in the revolution direction of the plurality of second planetary gears 322.

The second carrier 324 is connected to the left and right wheels LW and RW, and finally transfers a reduced rotational power to the left and right wheels LW and RW.

As such, the power train system and the vehicle including the same according to the present embodiment may include the reduction gear parts 300 which are installed between the leading ends of the left and right axle shafts 220 and the left and right wheels, respectively, and implemented with a double planetary gear set. Thus, the whole load of the axle output unit 220 connected to the differential gear part 210 and the left and right axle shafts 221 and 222 can be distributed.

The whole length and width of a heavy equipment vehicle such as a forklift truck is shorter than those of a commercial vehicle. Thus, the heavy equipment vehicle has a design issue that most components such as a power generator, power converter and power transfer unit are inevitably concentrated in the middle of the vehicle body under the driver's seat. Furthermore, since a transmission assembly of the heavy equipment vehicle includes a plurality of components coupled to one shaft of the axle shaft 220 composed of the left and right axle shafts 220, the entire volume of the heavy equipment vehicle is increased. The increase of the volume may raise the manufacturing cost of the transmission housing that supports the load of the transmission assembly while forming the exterior of the transmission assembly. Moreover, individual components constituting the power converter and the power transfer unit are implemented with a number of gear assemblies. Since such a structure requires a process of manufacturing delicate gears, the manufacturing cost is inevitably increased.

The power train system and the vehicle including the same according to the present embodiment are designed in such a manner that the reduction gear part 300 which increases an output torque while reducing a transferred driving power is positioned at the outer end of the axle shaft 220 instead of the central portion of the axle shaft, and includes a double planetary gear set for accomplishing a high-torque output. Thus, the axle input unit 100 can be separated from the axle output unit 200 of which the load may be concentrated on the axle shaft 220, which makes it possible to not only distribute the whole load of the axle output unit 200, but also remove the existing torque converter 3.

Hereafter, various embodiments which can be implemented by changing the position and structure design of the reduction gear part 300 will be described in detail.

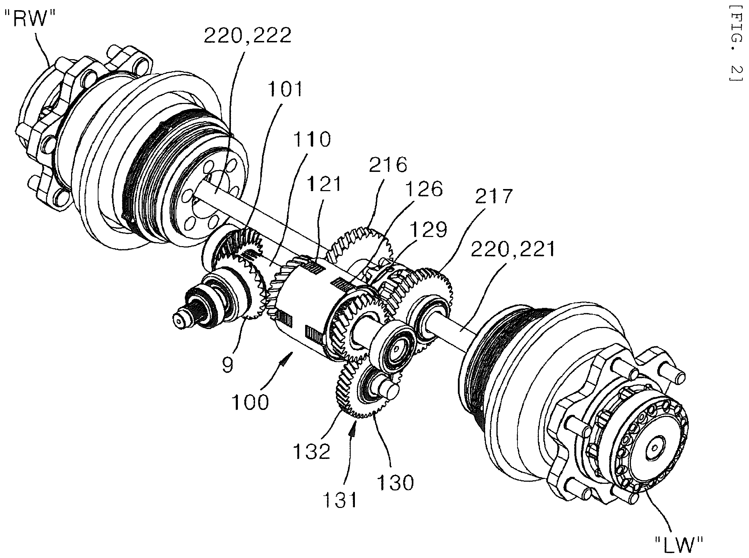

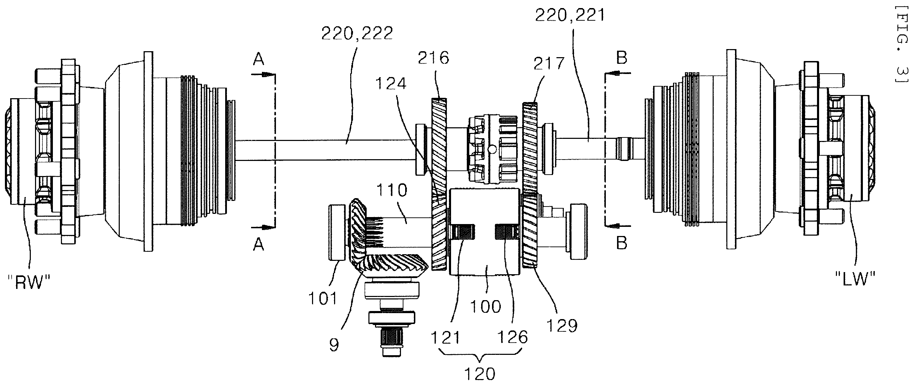

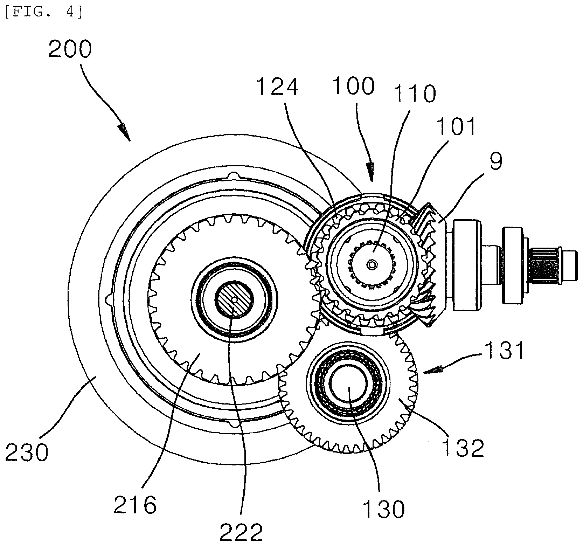

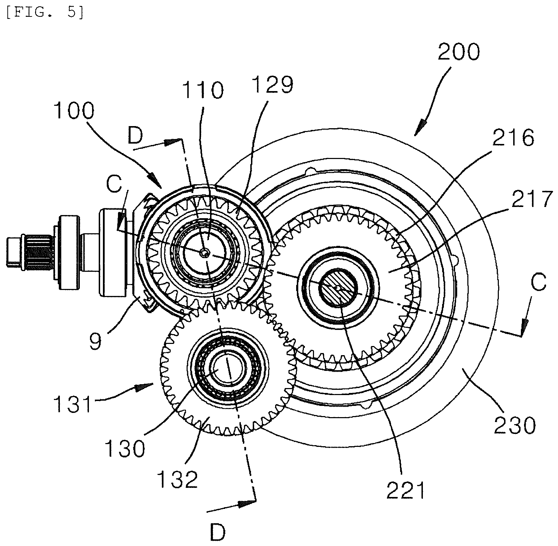

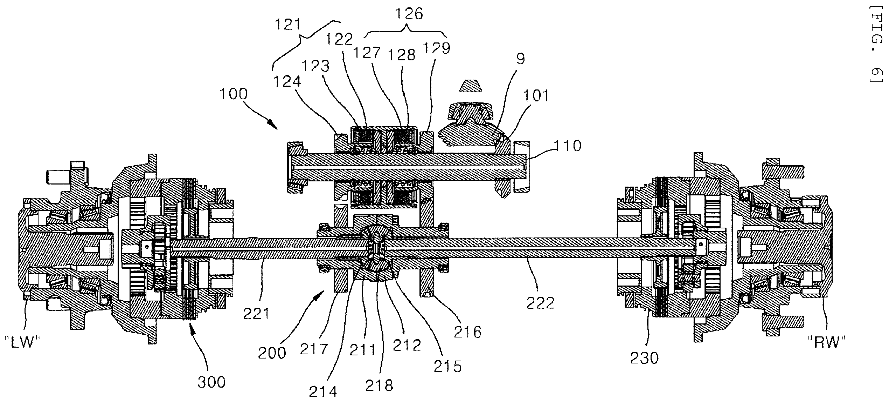

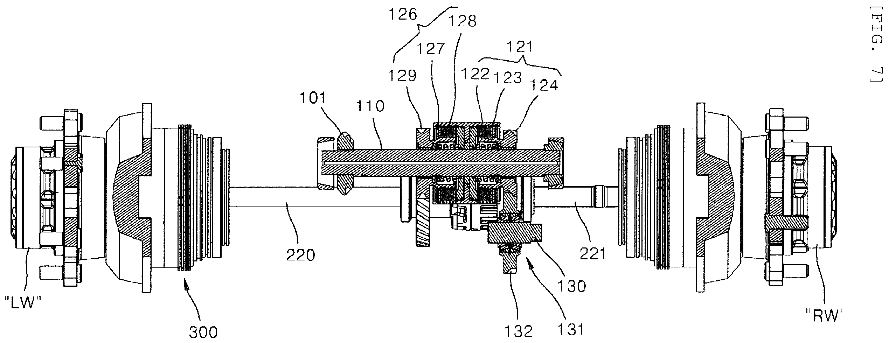

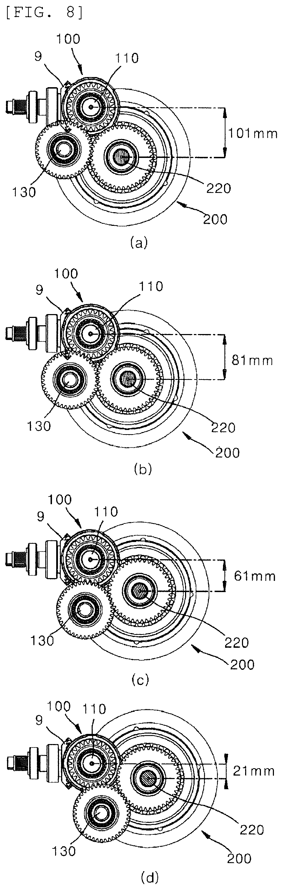

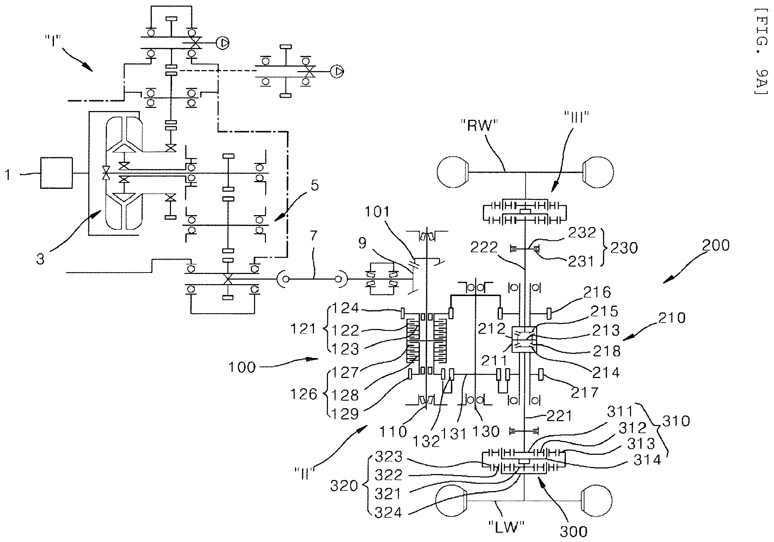

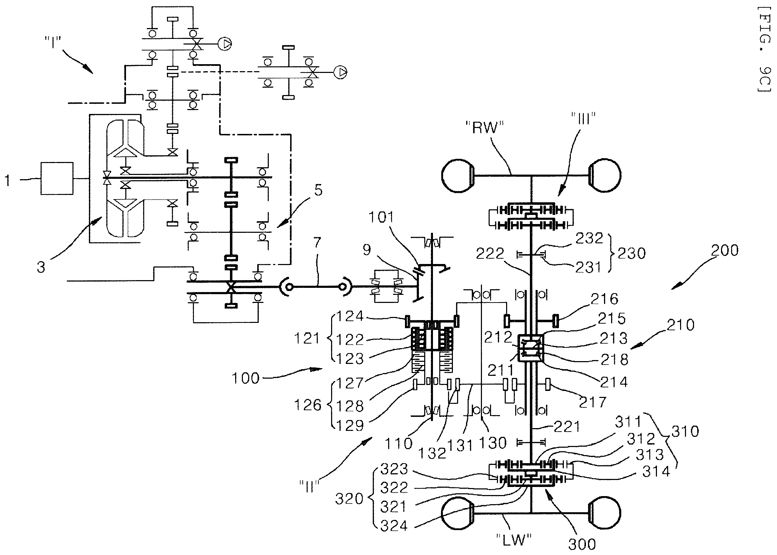

FIG. 2 is a perspective view illustrating an example of the second transmission unit II among the components of the power train system and the vehicle including the same according to the embodiment of the present disclosure, FIG. 3 is a front view of FIG. 2, FIG. 4 is a cross-sectional view taken along the line A-A of FIG. 3, FIG. 5 is a cross-sectional view taken along the line B-B of FIG. 3, FIG. 6 is a cross-sectional view taken along the line C-C of FIG. 5, FIG. 7 is a cross-sectional view taken along the line D-D of FIG. 5, FIGS. 8A to 8D are side views illustrating an operation effect of the power train system through the second transmission unit II, and FIGS. 9A and 9C illustrates power transfer processes during a neutral mode, a forward drive mode and a reverse drive mode through the second transmission unit II according to the example of FIG. 2.

Among the components of the power train system and the vehicle including the same according to the present embodiment, the second transmission unit II receives a driving power of the first transmission unit I through the bevel gear 9 of the bevel gear part installed at the leading end of the propeller shaft 7, as illustrated in FIGS. 2 to 8.

The bevel gear part and the axle input unit 100 are connected perpendicular to each other through the bevel gear 9, and the axle input unit 100 and the axle output unit 200 are disposed in parallel to each other with an idler part 131 disposed therebetween, and spaced a predetermined distance from each other.

As illustrated in FIGS. 2 to 8, the second transmission unit II may further include the idler part 131 which is installed between the axle input unit 100 and the axle output unit 200, and rotated only when power inputted by the axle input unit 100 is any one of a forward driving power and reverse driving power, but not rotated when the power inputted by the axle input unit 100 is a different driving power.

The first transmission unit I may further include a torque converter 3 which converts the torque of a rotational power, before inputting the rotational power to the axle input unit 100 of the second transmission unit II. The torque converter 3 includes a torque converter clutch to control an output shaft of the power generator 1 and an input shaft of the first transmission unit I, which have no reference numerals.

The driving torque outputted by the torque converter 3 is transferred to the axle input unit 100 of the second transmission unit II through the propeller shaft 7 having the bevel gear 9 installed at the leading end thereof. As is publicly known, the propeller shaft 7 is rotated through a universal joint coupling between one end and the other end thereof, and performs an addition function of absorbing a height change of the vehicle body by a suspension system (not illustrated).

The axle input unit 100 is separated from the axle shaft 220 of the axle output unit 200, receives power from the bevel gear part through an input driving shaft 110 described later, and transfers the received power to the axle output unit 200. More specifically, the axle input unit 100 includes the input driving shaft 110, a beveling gear 101, and a forward/reverse clutch part 121 and 126. The input driving shaft 110 is disposed perpendicular to the bevel gear rotating shaft corresponding to the rotation center of the bevel gear 9, the beveling gear 101 is formed on the outer circumferential surface of the input driving shaft 110, and the forward/reverse clutch part 121 and 126 is disposed on the outer circumference of the input driving shaft 110, and selectively switches a driving power to a forward driving power or reverse driving power, depending on whether operation oil is supplied.

The input driving shaft 110 includes a forward drive gear 129 and reverse drive gear 124 installed on the outer circumferential surface thereof. The forward drive gear 129 and the reverse drive gear 124 are installed at one side and the other side of the input driving shaft 110 with forward/reverse clutch part 121 and 126 interposed therebetween, and selectively rotated with the input driving shaft 110 according to an operation of the forward/reverse clutch part 121 and 126.

The forward/reverse clutch part 121 and 126 includes a forward clutch part 121 and a reverse clutch part 126. The forward clutch part 121 is disposed at the forward drive gear 129, and fixes the input driving shaft 110 to the forward drive gear 129 depending on whether operation oil is supplied, and the reverse clutch part 126 is disposed at the reverse drive gear 124, and fixes the input driving shaft 110 to the reverse drive gear 124 depending on whether operation oil is supplied.

In other words, when operation oil is supplied to the forward clutch part 121 through a flow path, friction members of the forward clutch part 121 are pressed against each other to fix the input driving shaft 110 to the forward drive gear 129. Then, when the input driving shaft 110 is rotated, the forward drive gear 129 is rotated while the reverse drive gear 124 is stopped. The friction members may include a friction plate and friction disk which will be described later.

On the other hand, when operation oil is supplied to the reverse clutch part 126 through a flow path, friction members of the reverse clutch part 126 are pressed against each other to fix the input driving shaft 110 to the reverse drive gear 124. Then, when the input driving shaft 110 is rotated, the reverse drive gear 124 is rotated to output only a reverse driving power, while the forward drive gear 129 is stopped. The friction members of the reverse clutch part 126 include a friction plate and friction disk which will be described later.

More specifically, the forward clutch part 121 may include a hollow forward clutch drum (not illustrated), a ring-shaped forward piston (not illustrated), one or more ring-shaped friction plates 122, a forward coupling and one or more ring-shaped friction disks 123. The hollow forward clutch drum has a cylinder installed at one side of the inside thereof, the ring-shaped forward piston is installed in the cylinder while being supported by a spring, and moved in the longitudinal direction of the input driving shaft 110 by hydraulic pressure when operation oil is supplied, the one or more ring-shaped friction plates 122 are coupled to the inner circumferential surface of the forward clutch drum at the other side of the inside of the forward clutch drum so as to be spaced from each other, the forward coupling is coupled to the input driving shaft 110 and extended into the forward clutch drum, and the one or more ring-shaped friction disks 123 are coupled to the outer circumferential surface of the forward coupling, such that the friction plates 122 and the friction disks 123 are alternately arranged while both side surfaces thereof are maintained at a predetermined distance.

Similarly, the reverse clutch part 126 may include a hollow reverse clutch drum (not illustrated), a ring-shaped reverse piston (not illustrated), one or more ring-shaped friction plates 127, a reverse coupling and one or more ring-shaped friction disks 128. The hollow reverse clutch drum has a cylinder installed at one side of the inside thereof, the ring-shaped reverse piston is installed in the cylinder while being supported by a spring, and moved in the longitudinal direction of the input driving shaft 110 by hydraulic pressure when operation oil is supplied, the one or more ring-shaped friction plates 128 are coupled to the inner circumferential surface of the reverse clutch drum at the other side of the inside of the reverse clutch drum so as to be spaced from each other, the reverse coupling is coupled to the input driving shaft 110 and extended into the reverse clutch drum, and the one or more ring-shaped friction disks 128 are coupled to the outer circumferential surface of the reverse coupling, such that the friction plates 127 and the friction disks 128 are alternately arranged while both side surfaces thereof are maintained at a predetermined distance.

The power train system and the vehicle including the same according to the present embodiment are implemented as a positive system in which the friction plates 122 and 127 and the friction disks 123 and 128 are pressed against each other when operation oil is supplied. However, the present embodiment is not limited thereto. The power train system and the vehicle including the same according to the present embodiment can be implemented as a negative system in which the friction plates 122 and 127 and the friction disks 123 and 128 are pressed against each other at normal times, but separated from each other and fixed to the input driving shaft 110 when operation oil is supplied.

As such, the rotational power outputted from the axle input unit 100 by operation oil which is selectively supplied through the forward clutch part 121 or the reverse clutch part 126 may be transferred as a forward driving power or reverse driving power to the axle output unit 200, or the power of the axle input unit 100 may be controlled not to be outputted to the axle output unit 200, in order to maintain the neutral mode.

As illustrated in FIG. 4, the idler part 131 is disposed between the input driving shaft 110 and the axle shaft 220, and includes an idle gear 132 having an idler shaft 130 disposed in parallel to the input driving shaft 110 and the axle shaft 220.

As illustrated in FIGS. 4 and 5, one side of the outer circumferential surface of the idle gear 132 is engaged with any one of the forward drive gear 129 and the reverse drive gear 124, and the other side of the outer circumferential surface of the idle gear 132 is engaged with any one of the left and right differential transfer gears 217 and 216 installed in the left and right differential gear cases 211 and 212 described later, respectively.

The power train system and the vehicle including the same according to the present embodiment may have a structure in which one side of the idle gear 132 in the idler part 131 is engaged with the forward drive gear 129, and the other side of the idle gear 132 is engaged with the left differential transfer gear 217 of the left differential gear case 211. However, the one side of the idle gear 132 may be engaged with the reverse drive gear 124, and the other side of the idle gear 132 may be engaged with the right differential transfer gear 216 of the right differential gear case 212. At this time, the rotation direction of the rotational power inputted from the first transmission unit I may be reversed.

The idle gear 132 is engaged with only the forward drive gear 129 between the forward and reverse drive gears 129 and 124, such that an output driving power inputted to the axle output unit 200 is classified into a forward driving power transferred through the axle input unit 100-the idler unit 131-the axle output unit 220 and a reverse driving power transferred through the axle input unit 100-the axle output unit 200.

The forward driving power or the reverse driving power inputted from the axle input unit 100 is selectively transferred to the differential gear part 210 through the idle gear 132 of the idler part 131, and the differential gear part 210 outputs the driving power to rotate the left and right axle shafts 221 and 222 in the same direction.

In the power train system and the vehicle including the same according to the present embodiment, the second transmission unit II according to the example of FIG. 2 has a structure in which the forward/reverse clutch part 121 and 126 which may be directly coupled to the axle shaft 220 is disposed outside so as to be separated from the axle shaft 220, as illustrated in FIGS. 2 to 7. Thus, the second transmission unit II can simplify the entire structure of the axle shaft 220 including the differential gear part 210.

That is, as illustrated in FIGS. 8A to 8D, the axle input unit 100 can be fixed at a predetermined position in the circumferential direction of the axle shaft 220, while a connection angle formed by the axial centers of the input driving shaft 110 and the bevel gear rotating shaft of the bevel gear part is fixed.

More specifically, the axle input unit 100 can be fixed at a predetermined position in a semicircle range corresponding to a side where the axle input unit 100 is installed, based on an arbitrary vertical line passing through the axial center of the input driving shaft 110.

This may indicate that the axle input unit 100 can be fixed at a predetermined position in a semicircle range corresponding to the side where the axle input unit 100 is installed, based on an arbitrary vertical line passing through the axial centers of the left and right differential transfer gears 217 and 216.

Furthermore, while one side of the idler part is connected to the forward drive gear 129 of the forward clutch part 121 and the other side of the idler part is connected to any one of the left and right differential transfer gears 217 and 216, the reverse drive gear 124 of the reverse clutch part 126 in the axle input unit 100 can be engaged with a predetermined position in a semicircle range corresponding to the side where the axle input unit 100 is installed, based on an arbitrary vertical line passing through the axial center of the other of the left and right differential transfer gears 217 and 216.

At this time, one side of the idle gear of the idler part may be engaged with the forward drive gear 129, and the other side of the idle gear may be engaged with the left differential transfer gear 217.

More specifically, as illustrated in FIGS. 8A to 8D, the idler shaft 130 of the idler part 131 may be additionally installed as an intermediate shaft between the axle input unit 100 and the axle shaft 220. Thus, the vertical height of the rotating shaft of the bevel gear part with respect to the rotation center of the axle shaft 220 can be flexibly designed along the circumferential direction of the axle shaft 220.

In the related art, the rotating shaft of the bevel gear part and the rotating shaft of the beveling gear 101 (that is, the center axis of the axle shaft 220) have a limited degree of freedom in design due to the power transmission characteristic of the bevel gear 9. In the second transmission unit II according to the present embodiment, however, the beveling gear 101 engaged with the bevel gear 9 may be installed on the input driving shaft 110 of the axle input unit 100 separated from the axle shaft 220, such that the bevel gear 9 and the beveling gear 101 can be fixed at positions having the best gear engagement efficiency. Moreover, as long as the gear engagement efficiency is not degraded, the bevel gear part and the axle input unit 100 can be freely positioned along the circumferential direction of the axle output unit 200.

Therefore, the axle housing (not illustrated) can be designed to have a slim structure, and the degree of freedom in design for the external shape of the axle housing can be increased. Thus, the product can be designed to have a small size.

In the power train system and the vehicle including the same according to the present embodiment, speed change processes through the second transmission unit II during the neutral state, the forward driving mode and the reverse driving mode will be described in detail with reference to FIGS. 9A to 9C.

First, the neutral mode will be described.

During the neutral mode as illustrated in FIG. 9A, operation oil is not supplied to both of the forward and reverse clutch parts 121 and 126. Therefore, although a rotational power is inputted to the input driving shaft through the bevel gear 9 of the bevel gear part from the power generator 1 or the power converter, none of the forward clutch part 121 and the reverse clutch part 126 are operated because no hydraulic pressure is supplied to the forward/reverse clutch part 121 and 126. In this case, since the forward drive gear 129 and the reverse drive gear 124 are not rotated, power transmission is not performed. That is, the neutral mode is achieved.

Next, the forward driving mode will be described.

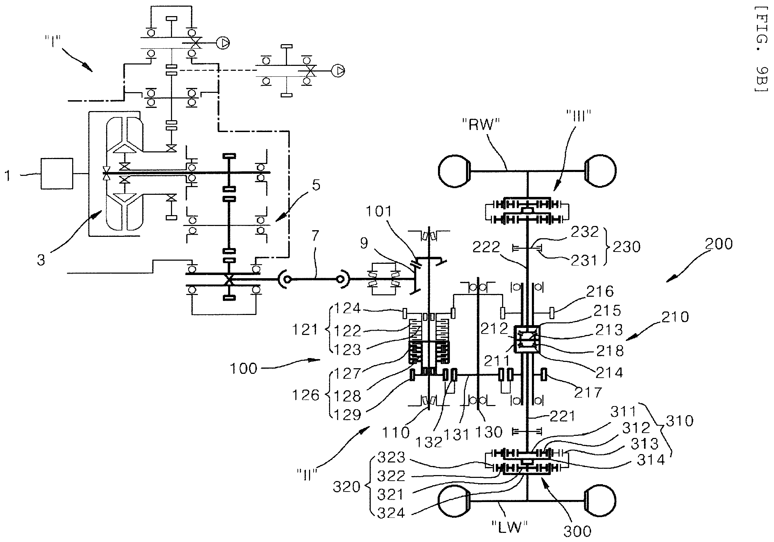

Referring to FIG. 9B, a power transfer process in which forward driving is achieved by the forward/reverse clutch part 121 and 126 will be described as follows. That is, a rotational power inputted to the forward/reverse clutch part 121 and 126 through the bevel gear 9 of the bevel gear part from the driving source may rotate the forward drive gear 129 while the forward clutch part 121 and the input driving shaft 110 are fixed to each other depending on whether operation oil is supplied. At this time, the idle gear 132 of the idler part 131 may be engaged and rotated with the forward drive gear 129, and rotate the left differential transfer gear 217. The rotation of the left differential transfer gear 217 may forward drive the left axle shaft 221 and the right axle shaft 222.

When the axle shaft 220 is forward driven, the axle shaft 220 is decelerated by the reduction gear part 300 including a double planetary gear set, and finally forward drives the left wheel LW and the right wheel RW.

Finally, the reverse driving mode will be described.

Referring to FIG. 9C, a power transfer process in which reverse driving is achieved by the forward/reverse clutch part 121 and 126 will be described as follows. That is, a rotational power inputted to the forward/reverse clutch part 121 and 126 through the bevel gear 9 of the bevel gear part from the driving source may rotate the reverse drive gear 124, while the reverse clutch part 126 and the input driving shaft 110 are fixed to each other depending on whether operation oil is supplied. At this time, the reverse drive gear 124 may be directly engaged with the right differential transfer gear 216 and rotate the right differential transfer gear 216, and the rotation of the right differential transfer gear 216 may reversely drive the right axle shaft 222 and the left axle shaft 221.

Similarly, when the axle shaft 220 is reversely driven, the axle shaft 220 is decelerated by the reduction gear part 300 including a double planetary gear set, and finally reversely drive the left wheel LW and the right wheel RW.

In the power train system and the vehicle including the same according to the present embodiment, the second transmission unit II may include the axle input unit 100 having the forward/reverse clutch part 121 and 126 such that the input driving shaft 110 is separated from the differential gear part 210 or the axle shaft 220 and disposed in parallel to the differential gear part 210 or the axle shaft 220, thereby increasing the degree of freedom in design.

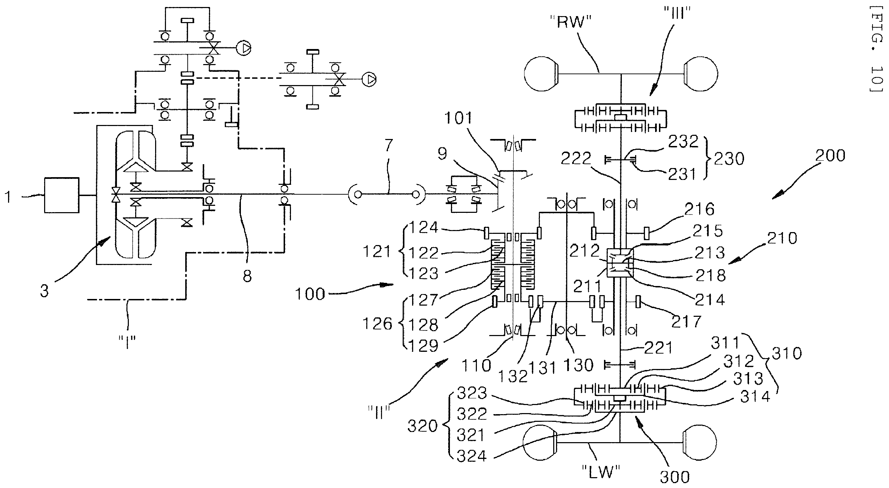

FIG. 10 is a configuration diagram illustrating an example of the first transmission unit I among the components of the power train system and the vehicle including the same according to the embodiment of the present disclosure.

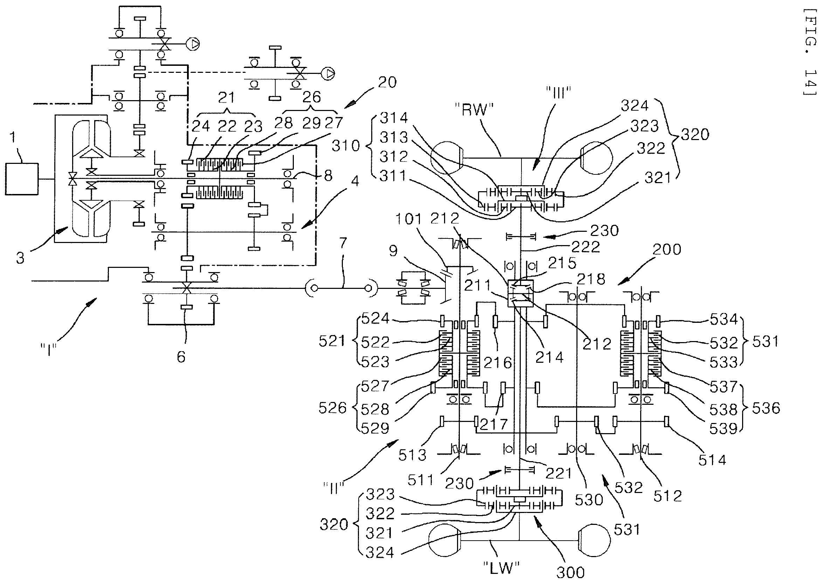

As illustrated in FIG. 10, the above-described second transmission unit II can create a new advantage in that the output end of the torque converter 3 installed in the first transmission unit I and the propeller shaft 7 can be directly connected to each other on one axis. The output end may correspond to an output shaft 8 of FIGS. 14 to 15E which will be described later.

The related art has a design issue in that the output shaft of the engine, the rotating shaft of the propeller shaft 7 and the differential gear must be designed to be positioned on one axis, in order to directly connect the output end of the torque converter 3 to the propeller shaft 7. Therefore, when the output shaft of the engine, the rotating shaft of the propeller shaft 7 and the differential gear part 210 are not positioned on one axis due to the difficulty in design or limitation in structure design, a compensation gear part 5 is necessarily installed as illustrated in FIG. 1. The compensation gear part 5 is engaged with a transfer gear installed on the output shaft of the torque converter 3, in order to transfer a driving power.

In the power train system and the vehicle including the same according to the present embodiment, however, the second transmission unit II includes the input driving shaft 110 separated from the axle shaft 220. Thus, by properly changing the formation position of the beveling gear 101 integrated with the input driving shaft 110 without directly connecting the bevel gear 9 corresponding to the input end of the propeller shaft 7 to the differential gear part 210, the output end (or the output shaft 8) of the torque converter 3 and the propeller shaft 7 can be designed to be directly connected to each other on one axis.

That is, when the first transmission unit I further includes the compensation gear part 5 and the output end of the torque converter 3 and the propeller shaft 7 are directly connected to each other on one axis, the installation position of the beveling gear 101 on the input driving shaft 110 can be designed in a different manner from when the first transmission unit I does not include the compensation gear part 5 and the output end of the torque converter 3 and the propeller shaft 7 are not directly connected to each other on one axis. This structure can be applied in the same manner for the installation position of a multi-stage driving shaft 511 of a beveling gear 501 in another example of the second transmission unit II which will be described later.

In the power train system and the vehicle including the same according to the present embodiment, the operation of the second transmission unit II according to the example of FIG. 2 is limited to the neutral mode, the forward driving mode (first forward speed mode) and the reverse driving mode (first reverse speed mode).

Therefore, the present disclosure suggests another example of the second transmission unit II which includes the neutral mode, two forward speed modes and two reverse speed modes.

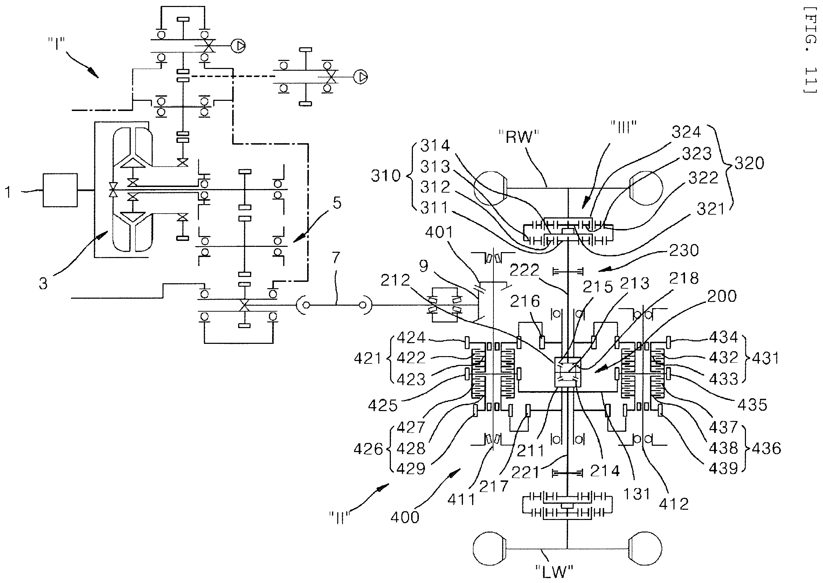

FIG. 11 is a configuration diagram illustrating another example of the second transmission unit II in the power train system and the vehicle including the same according to the embodiment of the present disclosure.

In the power train system and the vehicle including the same according to the present embodiment, the second transmission unit II according to the example of FIG. 11 may include an axle input unit 400 and an axle output unit 200. The axle input unit 400 is connected to the bevel gear 9 of the bevel gear part, receives a driving power of the first transmission unit I, and selectively changes the received driving power to the first and second forward speeds and the first and second reverse speeds, and the axle output unit 200 receives the driving power outputted from the axle input unit 400, and outputs the received driving power to the wheel driving units III connected to the left wheel LW and the right wheel RW.

As illustrated in FIG. 11, the axle input unit 400 may include a reverse driving input part 421 and 426 and a forward driving input part 431 and 436. The reverse driving input part 421 and 426 receives the driving power outputted from the bevel gear 9 of the bevel gear part, and switches the received driving power to any one of the first and second reverse speeds, and the forward driving input part 431 and 436 receives the driving power outputted from the bevel gear 9 of the bevel gear part, and switches the received driving power to any one of the first and second forward speeds.

In the power train system and the vehicle including the same according to the present embodiment, the second transmission unit II according to the example of FIG. 2 outputs a driving power inputted through the bevel gear 9 of the bevel gear part as a forward or reverse driving power through the forward/reverse clutch part 121 and 126 and the idler part 131, and transfers the driving power to the axle output unit 200, as illustrated in FIGS. 1 to 9C. At this time, the second transmission unit II outputs the driving power at a constant speed without changing the rotation speed.

However, the second transmission unit II according to the example of FIG. 11 in the power train system and the vehicle including the same according to the present embodiment can not only output a rotational driving power inputted to the axle input unit 400 as a driving power corresponding to any one of the first and second reverse speeds through the reverse driving input part 421 and 426, but also output the rotational driving power as a driving power corresponding to any one of the first and second forward speeds through the forward driving input part 431 and 436.

More specifically, the reverse driving input part 421 and 426 may include a reverse input driving shaft 411 and a reverse multi-stage clutch pack. The reverse input driving shaft 411 is disposed at a side where the driving power of the bevel gear part is received, based on the axle shaft 220, and performs the same function as the input driving shaft 110, and the reverse multi-stage clutch pack is disposed on the reverse input driving shaft 411.

As described later, the reverse multi-stage clutch pack may include a pair of clutch packs which are selectively fixed to the reverse input driving shaft 411 depending on whether operation oil is supplied.

That is, the reverse multi-stage clutch pack includes a beveling gear 401, first and second reverse speed clutch parts 426 and 421 and a connection drive gear 425. The beveling gear 401 is formed on one side of the outer circumferential surface of the reverse input driving shaft 411 disposed perpendicular to the rotating shaft of the bevel gear part, the first and second reverse speed clutch parts 426 and 421 are disposed on the outer circumference of the reverse input driving shaft 411, and selectively switches a driving power into a first-reverse-speed driving power and second-reverse-speed driving power depending on whether oil is supplied, and the connection drive gear 425 is rotated with the reverse input driving shaft 411, and disposed between the first and second reverse speed clutch parts 426 and 421.

The reverse multi-stage clutch pack may further include a first reverse speed drive gear 429 and a second reverse speed drive gear 424. The first reverse speed drive gear 429 is rotated in connection with the first reverse speed clutch part 426, and engaged with a first speed differential transfer gear 217 of the differential gear part 210 so as to transfer the first-reverse-speed driving power, and the second reverse speed drive gear 424 is rotated in connection with the second reverse speed clutch part 421, and engaged with a second speed differential transfer gear 216 of the differential gear part 210 so as to transfer the second-reverse-speed driving power. The differential gear part 210 will be described later.

The forward driving input part 431 and 436 may include a forward input driving shaft 412 installed in parallel to both of the axle shaft 220 and the reverse input driving shaft 411 and a forward multi-stage clutch pack disposed on the forward input driving shaft 412.

At the time, as illustrated in FIG. 11, the axle shaft 220, the reverse input driving shaft 411 and the forward input driving shaft 412 may be disposed in parallel to each other.

As described later, the forward multi-stage clutch pack may include a pair of clutch packs which are selectively fixed to the forward input driving shaft 412 depending on whether operation oil is supplied.

That is, the forward multi-stage clutch pack includes first and second forward speed clutch parts 436 and 431 and a connection driven gear 435. The first and second forward speed clutch parts 436 and 431 are disposed on the outer circumference of the forward input driving shaft 412 disposed in parallel to the reverse input driving shaft 411, and selectively switch a driving power into a first-forward-speed driving power and second-forward-speed driving power depending on whether operation oil is supplied. The connection driven gear 435 is disposed between the first and second forward speed clutch parts 436 and 431.

The forward multi-stage clutch pack may further include a first forward speed drive gear 439 and a second forward speed drive gear 434. The first forward speed drive gear 439 is rotated in connection with the first forward speed clutch part 436, and engaged with the first speed differential transfer gear 217 of the differential gear part 210 so as to transfer the first-forward-speed driving power, and the second forward speed drive gear 434 is rotated in connection with the second forward speed clutch part 431, and engaged with the second speed differential transfer gear 216 of the differential gear part 210 so as to transfer the second-forward-speed driving power.

In the power train system and the vehicle including the same according to the present embodiment, the second transmission unit II according to the example of FIG. 11 may further include an idler part 131 having an idle gear (not illustrated) which is disposed to surround the axle shaft 220 or desirably the differential gear part 210, has one side engaged with the connection drive gear 425 of the reverse multi-stage clutch pack and the other side engaged with the connection driven gear 435 of the forward multi-stage clutch pack, and rotates the reverse input driving shaft 411 and the forward input driving shaft 412 at the same time.

The second transmission unit II may further include the first and second speed differential transfer gears 217 and 216 formed on the outer circumferential surfaces of the left and right differential gear cases 211 and 212, respectively. The first speed differential transfer gear 217 is engaged with the first reverse speed drive gear 429 or the first forward speed drive gear 439, and the second speed differential transfer gear 216 is engaged with the second reverse speed drive gear 424 or the second forward speed drive gear 434.

The driving power inputted from the bevel gear 9 of the bevel gear part is outputted to fix any one of the forward multi-stage clutch pack and the reverse multi-stage clutch pack, is speed-changed while being transferred to the differential gear part 210, and finally transferred to the wheel driving units III connected to the left and right wheels LW and RW through the left and right axle shafts 221 and 222.

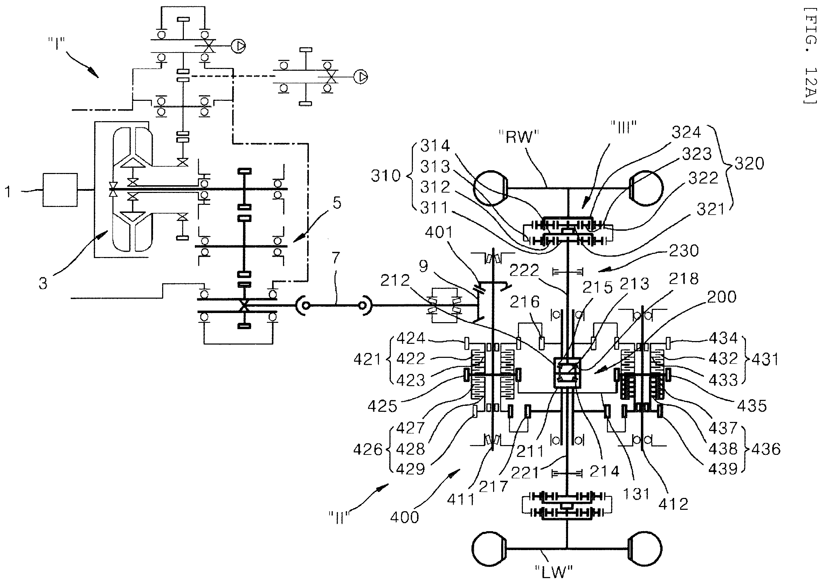

FIGS. 12A to 12D are configuration diagrams illustrating power transfer processes by the second transmission unit II according to the example of FIG. 11 during the first forward speed mode, the second forward speed mode, the first reverse speed mode and the second reverse speed mode in the power train system and the vehicle including the same according to the present embodiment.

The speed change processes by the second transmission unit II according to the example of FIG. 11 during the neutral mode, the first forward speed mode, the second forward speed mode, the first reverse speed mode and the second reverse speed mode in the power train system and the vehicle including the same according to the present embodiment will be described in detail as follows.

First, the neutral mode will be described.

During the neutral mode as illustrated in FIG. 11, operation oil is not supplied to both of the forward clutch part 431 and 436 and the reverse clutch part 421 and 426. Therefore, when a rotational power is inputted to the reverse input driving shaft 411 through the bevel gear 9 of the bevel gear part, the reverse input driving shaft 411 is rotated, and the connection drive gear 425 is simultaneously rotated with the reverse input driving shaft 411. At this time, the forward input driving shaft 412 is also rotated by the idle gear of the idler part 131 which is engaged with the connection drive gear 425 and the connection driven gear 435 at the same time. In this case, however, since operation oil is not supplied to both of the forward clutch part 431 and 436 and the reverse clutch part 421 and 426, none of the forward clutch part 431 and 436 and the reverse clutch part 421 and 426 are operated, and none of the first forward speed drive gear 439 of the first forward speed clutch part 436 of the forward clutch part 431 and 436, the second forward speed drive gear 434 of the second forward speed clutch part 431 of the forward clutch part 431 and 436, the first reverse speed drive gear 429 of the first reverse speed clutch part 426 of the reverse clutch part 421 and 426, and the second reverse speed drive gear 424 of the second reverse speed clutch part 421 of the reverse clutch part 421 and 426 are rotated. Thus, the neutral mode is maintained while power transfer is not performed.

Hereafter, the second transmission unit II which is configured to change the torque and RPM of a driving power through multiple stages using the axle output unit 200 will be described. For example, the case in which the second transmission unit II is operated in the first or second forward or reverse speed mode will be described.

The second transmission unit II selectively readjusts a preset torque and RPM of a driving power transferred from the torque converter 3. The readjustment may indicate that the second transmission unit II primarily adjusts the torque and RPM of power generated by the power generator 1, that is, rotational power through the torque converter 3, and then secondarily adjusts the adjusted rotational power through the axle input unit and the axle output unit. In this case, the readjustment may include changing the rotation direction of the rotational power. For example, the second transmission unit II can change the rotation direction to the forward or reverse direction in order to switch the driving mode to the forward or reverse driving mode.

The readjustment may be performed by the axle input unit 100 and the axle output unit 200. The axle input unit 100 may decide the rotation direction for setting the forward or reverse driving mode as described above, and the axle output unit 200 may transfer the driving power received from the axle input unit 100 to the left and right wheels through two specific speeds, thereby readjusting the rotation information, that is, the torque and RPM of the driving power.

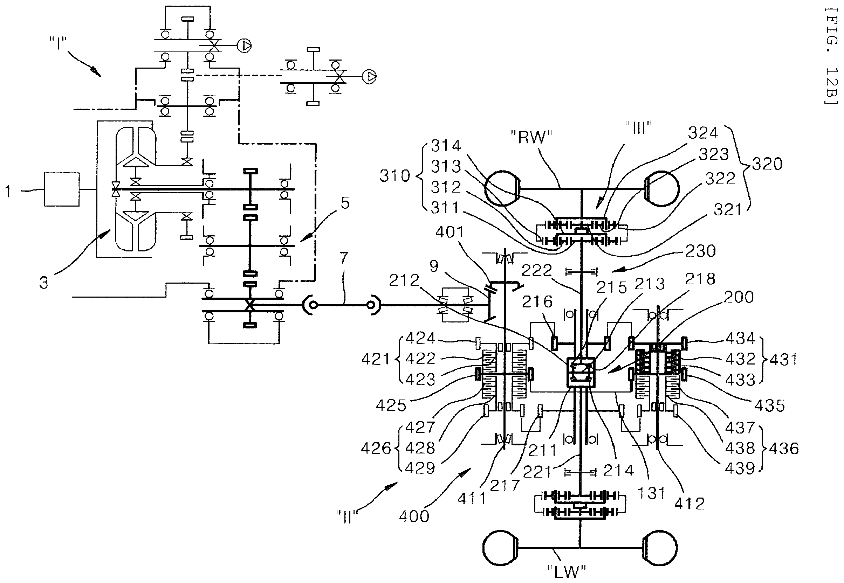

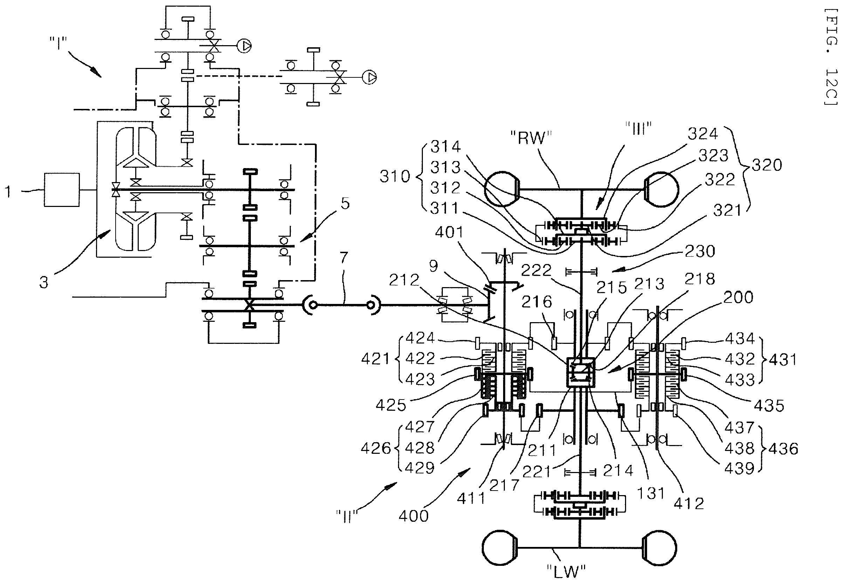

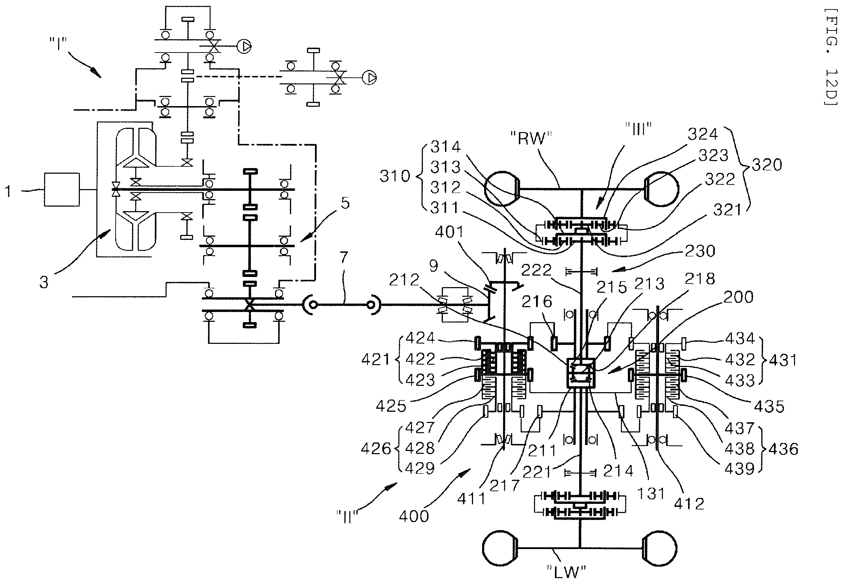

The specific speeds may indicate the number of speeds capable of changing a gear ratio. In an embodiment which will be described with reference to FIG. 12, the second transmission unit II may include two speeds, and change the velocity and torque by selectively driving power to the two speeds through application or cut-off of power by the connected idler part 131.

That is, when the torque of a driving power generated by the power generator 1 is converted by the first transmission unit I, the torque-changed driving power may be transferred to the axle output unit 200 through the second transmission unit II. Then, the rotation direction and speed of the driving power may be changed through the axle input unit 400 of the second transmission unit II. At this time, while the driving power is selectively transferred to the reverse driving input part 421 and 426 and the forward driving input part 431 and 436 which are included in the axle input unit 400, the corresponding rotation direction can be decided.

Specifically, the driving power may be connected to one of the reverse driving input part 421 and 426 and the forward driving input part 431 and 436 through the idler part 131. In order to describe the present embodiment, the case in which the idler part 133 transfers the driving power to the axle output unit 200 in connection with the reverse driving input part 421 and 426 will be taken as an example for description.

Furthermore, the rotation direction may be changed while the driving power is selectively transferred to the first speed clutch part 426 and 436 and the second speed clutch part 421 and 431 which are included in the reverse driving input part 421 and 426 and the forward driving input part 431 and 436, respectively. When the driving power is transferred to the axle output unit 200 through the reverse driving input part 421 and 426, the driving power may be transferred through a connection between the idler part 131 and one of the reverse driving input part 421 and 426 and the forward driving input part 431 and 436.

More specifically, four cases will be described from the first forward speed mode.

Referring to FIG. 12A, the power transfer process in which the first forward speed is achieved by the forward clutch part 431 and 436 will be described as follows. When a rotational power is inputted to the reverse input driving shaft 411 through the bevel gear 9 of the bevel gear part, the reverse input driving shaft 411 is rotated, and the connection drive gear 425 is simultaneously rotated with the reverse input driving shaft 411. Simultaneously, the forward input driving shaft 412 is rotated by the idle gear of the idler part 131 which is engaged with the connection drive gear 425 and the connection driven gear 435 at the same time. At this time, when operation oil is supplied to the first forward speed clutch part 436 of the forward clutch part 431 and 436, the first forward speed drive gear 439 is rotated while the first forward speed clutch part 436 is fixed to the forward input driving shaft 412, the first speed differential transfer gear 217 engaged with the first forward speed drive gear 439 rotates the left differential gear case 211, and the left and right axle shafts 221 and 222 may be driven to the first forward speed by the rotation of the left differential gear case 211.

Next, the second forward speed mode will be described.

Referring to FIG. 12B, the second forward speed mode is performed in the same manner as the first forward speed mode until the forward input driving shaft 412 is rotated. Then, when operation oil is supplied to the second forward speed clutch part 431 of the forward clutch part 431 and 436, the second forward speed drive gear 434 is rotated while the second forward speed clutch part 431 is fixed to the forward input driving shaft 412, the second speed differential transfer gear 216 engaged with the second forward speed drive gear 434 rotates the right differential gear case 212, and the right and left axle shafts 222 and 221 may be driven to the second forward speed by the rotation of the right differential gear case 212.

Next, the first reverse speed mode will be described.

Referring to FIG. 12C, the power transfer process in which the first reverse speed is achieved by the reverse clutch part 421 and 426 will be described as follows. When a rotational power is inputted to the reverse input driving shaft 411 through the bevel gear 9 of the bevel gear part, the reverse input driving shaft 411 is rotated. At this time, when operation oil is supplied to the first reverse speed clutch part 426 of the reverse clutch part 421 and 426, the first reverse speed drive gear 429 is rotated while the first reverse speed clutch part 426 is fixed to the reverse input driving shaft 411, the first speed differential transfer gear 217 engaged with the first reverse speed drive gear 429 rotates the left differential gear case 211, and the left and right axle shafts 221 and 222 may be driven to the first reverse speed by the rotation of the left differential gear case 211. At this time, while the connection driven gear 435 engaged with the connection drive gear 425 of the reverse input driving shaft 411 is rotated, the connection driven gear 435 rotates the forward input driving shaft 412. However, since operation oil is not supplied to the forward clutch part 431 and 436, only the forward input driving shaft 412 is idled.

Next, the second reverse speed mode will be described.

Referring to FIG. 12D, the second reverse speed mode is performed in the same manner as the first reverse speed mode until the reverse input driving shaft 411 is rotated. Then, when operation oil is supplied to the second reverse speed clutch part 421 of the reverse clutch part 421 and 426, the second reverse speed drive gear 424 is rotated while the second reverse speed clutch part 421 is fixed to the reverse input driving shaft 411, the second speed differential transfer gear 216 engaged with the second reverse speed drive gear 424 rotates the right differential gear case 212, and the right and left axle shafts 222 and 221 may be driven to the second reverse speed by the rotation of the right differential gear case 212.

In the power train system and the vehicle including the same according to the present embodiment, the second transmission unit II according to the example of FIG. 11 can be modified in a different manner as described later.

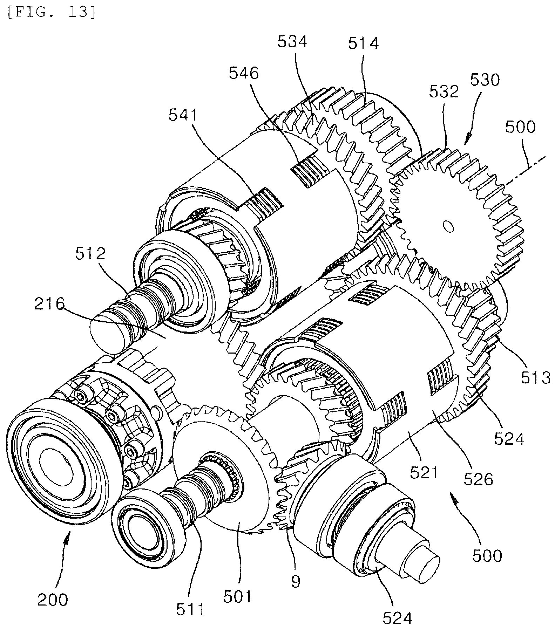

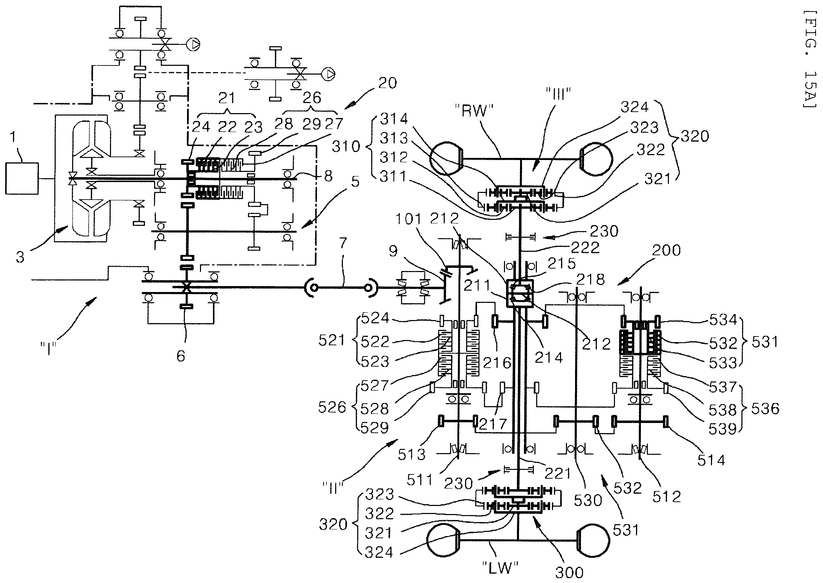

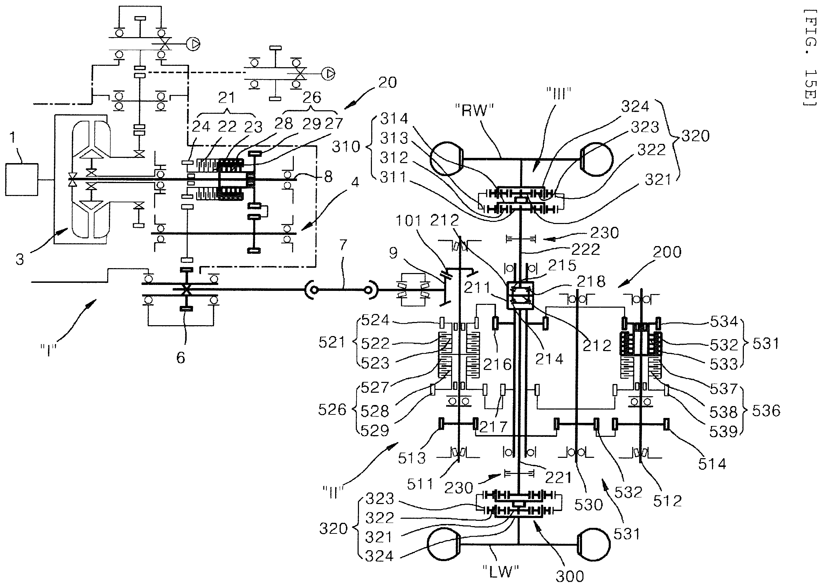

FIG. 13 is a perspective view illustrating still another example of the second transmission unit II in a power train system and a vehicle including the same according to another embodiment of the present disclosure, FIG. 14 is a configuration diagram of FIG. 13, FIGS. 15A to 15D are configuration diagrams illustrating power transfer processes during first to fourth forward speed modes, and FIG. 15E is a configuration diagram illustrating a power transfer process during a first reverse speed mode.

As illustrated in FIGS. 13 to 15E, the power train system and the vehicle including the same according to the present embodiment includes a first transmission unit I and a second transmission unit II. The first transmission unit I includes a forward/reverse output unit 20 which converts a driving power outputted from the power generator 1 into any one of a forward driving power and reverse driving power, and the second transmission unit II changes the forward driving power or reverse driving power received from the first transmission unit I to a specific speed among at least four rotation speeds.

That is, as illustrated in FIG. 14, the first transmission unit I can convert a driving power into a forward driving power or reverse driving power through the forward/reverse output unit 20 in advance.

The forward/reverse output unit 20 may be included in the first transmission unit I. As illustrated in FIG. 14, the forward/reverse output unit 20 may include a forward switching clutch part 21 and a reverse switching clutch part 26 which are installed on the outer circumference of the output shaft 8 directly connected to the output end of the torque converter 3, and have functions corresponding to the function of the forward/reverse clutch part 121 and 126. The forward switching clutch part 21 and the reverse switching clutch part 26 may be selectively operated depending on whether operation oil is supplied.

More specifically, the forward switching clutch part 21 may include a friction plate 22, a friction disk 23 and a forward drive gear 24, and the reverse switching clutch part 26 may include a friction plate 27, a friction disk 28 and a reverse drive gear 29.

At this time, a forward/reverse power switching shaft 4 may be installed at one side of the forward/reverse clutch part 20 so as to be disposed in parallel to an output shaft 8. One side of the forward/reverse power switching shaft 4 is engaged with only one of the forward drive gear 24 installed in the forward switching clutch part 21 and the reverse drive gear 29 installed in the reverse switching clutch part 26, and the other side of the forward/reverse power switching shaft 4 is directly engaged with a forward/reverse drive gear 6 installed on the propeller shaft 7 for transferring power to the bevel gear part.

In the power train system and the vehicle including the same according to the present embodiment, the one side of the forward/reverse power switching shaft 4 may be directly engaged with only the reverse drive gear 29. Therefore, when the reverse switching clutch part 26 of the forward/reverse clutch part 20 is fixed to the output shaft 8, a forward driving power of the power generator 1 may be converted into a reverse driving power. On the other hand, when the forward switching clutch part 21 of the forward/reverse clutch part 20 is fixed to the output shaft 8, a forward driving power of the power generator 1 may be directly transferred to the propeller shaft 7 without passing through the forward/reverse power switching shaft 4.

In the power train system and the vehicle including the same according to the present embodiment, the second transmission unit II may include an axle input unit 500 as illustrated in FIGS. 13 and 14. The axle input unit 500 has two or more shafts separated from the axle shaft 220 of the axle output unit 200, receives a driving power from the bevel gear 9 of the bevel gear part forming the bevel gear rotating shaft which is installed in the longitudinal direction of the vehicle body in order to supply a driving power converted into any one of the forward driving power and the reverse driving power by the first transmission unit I, and changes the received power to a specific speed among four rotation speeds.

In the following descriptions, the four rotation speeds will be sequentially referred to as first to four speeds in an ascending order of speed. Furthermore, 'specific speed' may indicate any one of the first to fourth speeds.

More specifically, the axle input unit 500 may include a drive-side axle input unit 521 and 526 and a driven-side axle input unit 531 and 536. The drive-side axle input unit 521 and 526 may be connected to the bevel gear 9 of the bevel gear part, receive any one of the forward driving power and the reverse driving power of the first transmission unit I, and selectively change the received driving power to the second or fourth speed among the first to fourth speeds, and the driven-side axle input unit 531 and 536 may receive the driving power from the drive-side axle input unit 521 and 526, and selectively change the received driving power to the first or third speed among the first to fourth speeds.

That is, the drive-side axle input unit 521 and 526 serves to change the forward or reverse driving power inputted from the first transmission unit I to two specific speeds among the four rotation speeds, and then selectively output one of the changed driving powers, and the driven-side axle input unit 531 and 536 serves to change the forward or reverse driving power inputted from the first transmission unit I to two specific speeds among the four rotation speeds, and then selectively output one of the changed driving powers.

As illustrated in FIGS. 13 and 14, an idler part 531 may be installed between the drive-side axle input unit 521 and 526 and the driven-side axle input unit 531 and 536, such that the drive-side axle input unit 521 and 526 and the driven-side axle input unit 531 and 536 are rotated in connection with each other at normal times. The idler part 531 will be described in more detail later.

More specifically, the drive-side axle input unit 521 and 526 includes a multi-stage driving shaft 511 and one multi-stage clutch pack 521 and 526. The multi-stage driving shaft 511 is separated from the axle shaft 220 and disposed in parallel to the axle shaft 220, and the one multi-stage clutch pack 521 and 526 is installed on the outer circumference of the multi-stage driving shaft 511, and fixed to the multi-stage driving shaft 511 in order to selectively change a driving power to the second or fourth speed among the first to fourth speeds depending on whether operation oil is supplied.

The driven-side axle input unit 531 and 536 includes a multi-stage driven shaft 512 and the other multi-stage clutch pack 531 and 536. The multi-stage driven shaft 512 is separated from the axle shaft 220 and the drive-side axle input unit 521 and 526 and disposed in parallel to the axle shaft 220 and the drive-side axle input unit 521 and 526, and the other multi-stage clutch pack 531 and 536 is installed on the outer circumference of the multi-stage driven shaft 512, and fixed to the multi-stage driven shaft 512 in order to selectively change a driving power to the first or third speed among the first to fourth speeds depending on whether operation oil is supplied.

The one multi-stage clutch pack 521 and 526 may include a pair of clutch packs which are fixed to the multi-stage driving shaft 511 so as to selectively change a driving power to the second or fourth speed depending on whether operation oil is supplied. Similarly, the other multi-stage clutch pack 531 and 536 may include a pair of clutch packs which are fixed to the multi-stage driven shaft 512 so as to selectively change a driving power to the first or third speed depending on whether operation oil is supplied.

More specifically, as illustrated in FIG. 14, the one multi-stage clutch pack 521 and 526 may include second and fourth speed clutch parts 521 and 526 which are installed on the outer circumference of the multi-stage driving shaft 511 disposed perpendicular to the rotating shaft of the bevel gear 9 of the bevel gear part, and selectively switches a driving power to the second or fourth speed depending on whether operation oil is supplied. The second and fourth speed clutch parts 521 and 526 may include second and fourth speed drive gears 524 and 529 installed therein, respectively.

Also, as illustrated in FIG. 14, the other multi-stage clutch pack 531 and 536 may include first and third speed clutch parts 531 and 536 which are installed in parallel to both the axle shaft 220 and the multi-stage driving shaft 511, disposed on the outer circumference of the multi-stage driven shaft 512 rotated by the driving power received from the multi-stage driving shaft 511 through the idler part 531, and selectively change the driving power to the first or third speed depending on whether operation oil is supplied. The first and third speed clutch parts 531 and 536 may include first and third driving gears 534 and 539 installed therein, respectively.

The idler part 531 may include an idle gear 532 which is installed in parallel to the axle shaft 220, the multi-stage driving shaft 511 and the multi-stage driven shaft 512, and engaged with one connection gear 513 installed on the multi-stage driving shaft 511 and the other connection gear 514 installed on the multi-stage driven shaft 512 at the same time.

At this time, as illustrated in FIGS. 11 to 12D, the idler part 531 can be rotated coaxially with the axle shaft 220 of the axle output unit 200, and the idle gear 532 can be rotated about a housing (not illustrated) for protecting the differential gear part 210 or the axle shaft 220 from outside.

Meanwhile, any one of the first and second transfer gears 217 and 216 is installed on the outer circumferential surface of any one of the left and right differential gear cases 211 and 212 so as to be engaged with the second or fourth speed drive gear 524 or 529, and the other of the first and second transfer gears 217 and 216 may be installed on the outer circumferential surface of the other of the left and right differential gear cases 211 and 212 so as to be engaged with the first or third speed drive gear 534 or 539.

The first and second transfer gears 217 and 216 may be installed in the left and right differential gear cases 211 and 212, respectively. As illustrated in FIGS. 11 to 12D, however, when the drive gears 524, 529, 534 and 539 of the axle input unit 500 are eccentrically arranged at any one side, the first and second transfer gears 217 and 216 may be collectively installed in any one of the left and right differential gear cases 211 and 212, while no transfer gears are installed in the other of the left and right differential gear cases 211 and 212.

The driving power which is classified into the forward or reverse driving power by the first transmission unit I in advance is inputted to the multi-stage driving shaft 511 and the multi-stage driven shaft 512 from the bevel gear 9 of the bevel gear part, and rotates the multi-stage driving shaft 511 and the multi-stage driven shaft 512 in connection with each other. Then, when any one of the first to fourth speed clutch parts 521, 526, 531 and 536 selectively fixes the multi-stage driving shaft 511 or the multi-stage driven shaft 512 coupled thereto depending on whether operation oil is supplied to the one multi-stage clutch pack 521 and 526 or the other multi-stage clutch pack 531 and 536, the driving power is speed-changed while being transferred to the differential gear part 210, and finally transferred to the wheel driving units III connected to the left and right wheels LW and RW through the left and right axle shafts 221 and 222.

In the power train system and the vehicle including the same according to the present embodiment, speed change processes by the second transmission unit II according to the example of FIG. 13 during the neutral mode, first to fourth forward speed modes and a first reverse speed mode will be described in detail as follows.

First, the neutral mode will be described.

During the neutral mode as illustrated in FIG. 14, operation oil is not supplied to both of the forward switching clutch part 21 and the reverse switching clutch part 26 in the forward/reverse output unit 20 of the first transmission unit I. Therefore, since a driving power which is inputted from the power generator 1 and converted by the torque converter 3 idles only the output shaft 8, the neutral mode is maintained.

Next, the first forward speed mode will be described.

Referring to FIG. 15A, a power transfer process in which the first forward speed is achieved by the forward/reverse clutch part 20 of the first transmission unit I and the first speed clutch part 531 of the second transmission unit II will be described as follows.

When the driving power converted by the torque converter 3 in the first transmission unit I is inputted to the output shaft 8, operation oil is supplied to the forward switching clutch part 21 of the forward/reverse output unit 20 so as to fix the forward switching clutch part 21 to the output shaft 8. Then, a forward driving power is outputted to the propeller shaft 7 through the auxiliary gear part 5 engaged with the forward drive gear 24 integrated with the forward switching clutch part 21.

When the forward driving power is inputted to the multi-stage driving shaft 511 through the bevel gear 9 of the bevel gear part installed at the leading end of the propeller shaft 7, the one connection gear 513 integrated with the multi-stage driving shaft 511 is rotated with the multi-stage driving shaft 511. Then, the multi-stage driven shaft 512 is also rotated by the idle gear 532 of the idler part 531 which is engaged with the one connection gear 513 and the other connection gear 514 integrated with the multi-stage driven shaft 512 at the same time.

At this time, when operation oil is supplied to the first speed clutch part 531 of the other multi-stage clutch pack 531 and 536 installed on the outer circumference of the multi-stage driven shaft 512, the first speed drive gear 534 may be engaged with the second transfer gear 216 while the first speed clutch part 531 is fixed to the multi-stage driven shaft 512, and then transfer a first-forward-speed driving power to the left and right axle shafts 221 and 222.

Next, the second forward speed mode will be described.

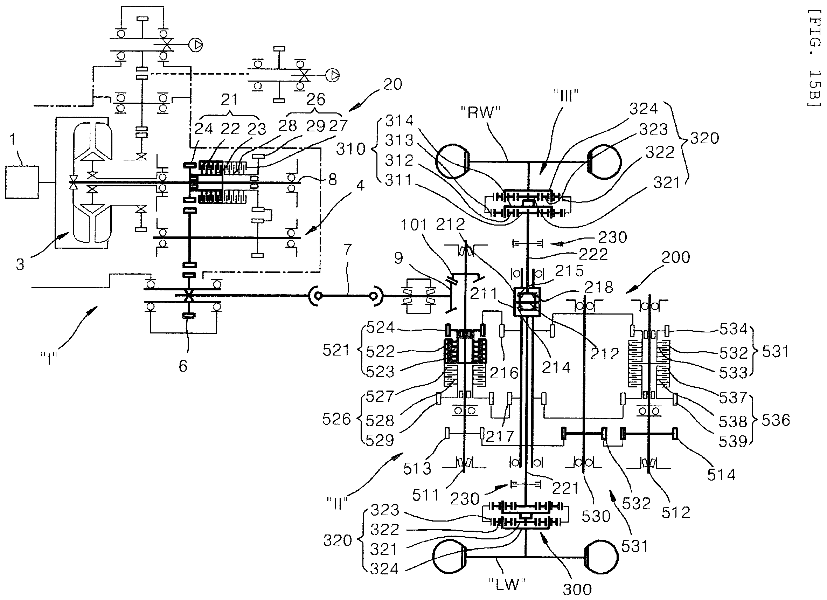

Referring to FIG. 15B, a power transfer process in which the second forward speed is achieved by the forward/reverse clutch part 20 of the first transmission unit I and the second speed clutch part 521 of the second transmission unit II will be described as follows.

Since the process in which the forward driving power of the first transmission unit I is inputted to the second transmission unit II is performed in the same manner as the first forward speed mode, the detailed descriptions thereof are omitted herein.

When the forward driving power is inputted to the multi-stage driving shaft 511 through the bevel gear 9 of the bevel gear part installed at the leading end of the propeller shaft 7, the multi-stage driving shaft 511 is rotated. When operation oil is supplied to the second speed clutch part 521 of the one multi-stage clutch pack 521 and 526 installed on the outer circumference of the multi-stage driving shaft 511, the second speed drive gear 524 may be engaged with the second transfer gear 216 while the second speed clutch part 521 is fixed to the multi-stage driving shaft 511, and then transfer a second-forward-speed driving power to the left and right axle shafts 221 and 222.

Next, the third forward speed mode will be described.

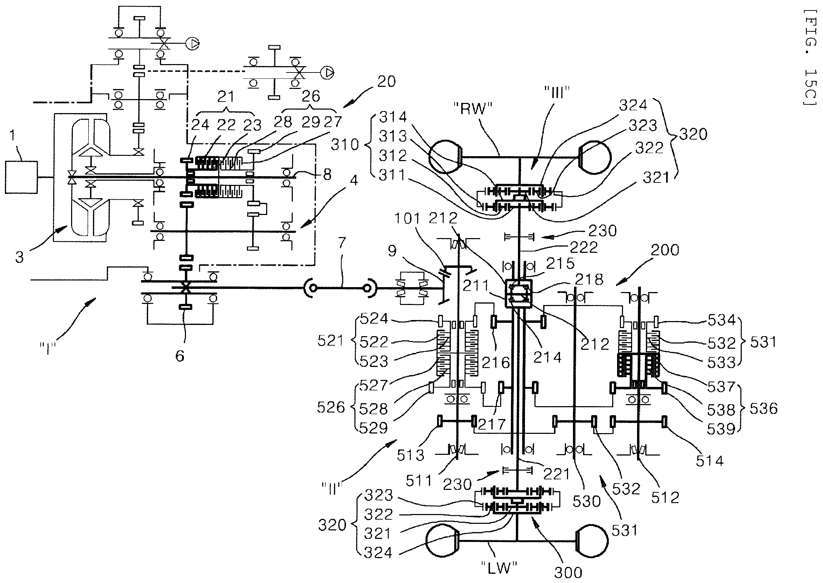

Referring to FIG. 15C, a power transfer process in which the third forward speed is achieved by the forward/reverse clutch part 20 of the first transmission unit I and the third speed clutch part 536 of the second transmission unit II will be described as follows.

Since the process in which the forward driving power of the first transmission unit I is inputted to the multi-stage driven shaft 512 of the second transmission unit II is performed in the same manner as the first forward speed mode, the detailed descriptions thereof are omitted herein.

When the multi-stage driven shaft 512 is rotated in connection with the multi-stage driving shaft 511 and operation oil is supplied to the third speed clutch part 536 of the other multi-stage clutch pack 531 and 536 installed on the outer circumference of the multi-stage driven shaft 512, the third speed drive gear 539 may be engaged with the first transfer gear 217 while the third speed clutch part 536 is fixed to the multi-stage driven shaft 512, and then transfer a third-forward-speed driving power to the left and right axle shafts 221 and 222.

Next, the fourth forward speed mode will be described.

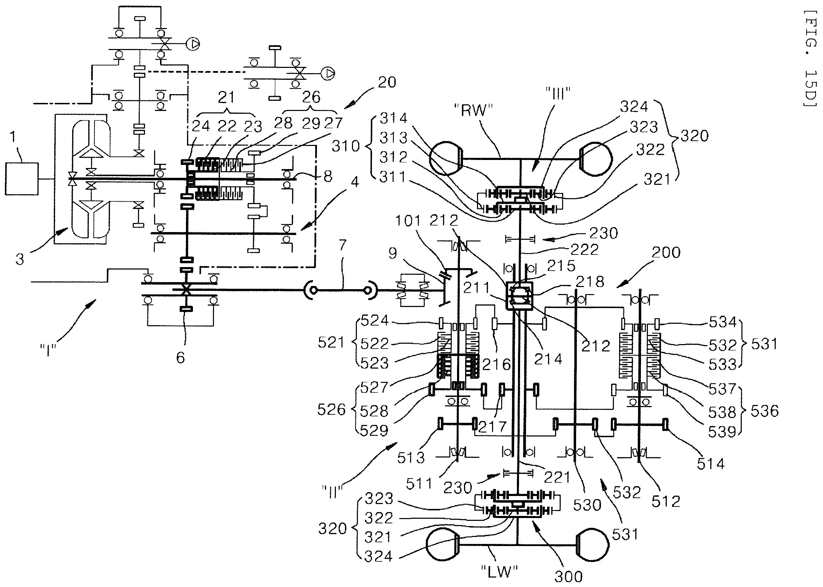

Referring to FIG. 15D, a power transfer process in which the fourth forward speed is achieved by the forward/reverse clutch part 20 of the first transmission unit I and the fourth speed clutch part 526 of the second transmission unit II will be described as follows.

Since the process in which the forward driving power of the first transmission unit I is inputted to the second transmission unit II is performed in the same manner as the second forward speed mode, the detailed descriptions thereof are omitted herein.

When the forward driving power is inputted to the multi-stage driving shaft 511 through the bevel gear 9 of the bevel gear part installed at the leading end of the propeller shaft 7, the multi-stage driving shaft 511 may be rotated. When operation oil is supplied to the fourth speed clutch part 526 of the one multi-stage clutch pack 521 and 526 installed on the outer circumference of the multi-stage driving shaft 511, the fourth speed drive gear 529 may be engaged with the first transfer gear 217 while the fourth speed clutch part 526 is fixed to the multi-stage driving shaft 511, and then transfer a fourth-forward-speed driving power to the left and right axle shafts 221 and 222.

Next, the first reverse speed mode will be described.

Referring to FIG. 15E, a power transfer process in which the first reverse speed is achieved by the forward/reverse clutch part 20 of the first transmission unit I and the first speed clutch part 531 of the second transmission unit II will be described as follows.

When the driving power torque-converted by the torque converter 3 in the first transmission unit I is inputted to the output shaft 8, operation oil is supplied to the reverse switching clutch part 26 of the forward/reverse output unit 20 so as to fix the reverse switching clutch part 26 to the output shaft 8. Then, a reverse driving power is outputted to the propeller shaft 7 through the auxiliary gear part 5 engaged with the reverse drive gear 29 integrated with the reverse switching clutch part 26.

Since the process in which a first-reverse-speed driving power is transferred to the axle output unit 200 after the reverse driving power is inputted to the multi-stage driving shaft 511 through the bevel gear 9 of the bevel gear part installed at the leading end of the propeller shaft 7 is performed in the same manner as the first forward speed mode, the detailed descriptions thereof are omitted herein.

In the power train system and the vehicle including the same according to the present embodiment, the second transmission unit II according to the example of FIG. 13 can achieve second to fourth reverse speeds as well as the first reverse speed.

According to a modification of the second transmission unit II, which is not illustrated, the third speed clutch part 536 of the first and third speed clutch parts 531 and 536 installed on the outer circumference of the multi-stage driven shaft 512 can be omitted, in order to achieve the first to third forward/reverse speeds.

In this case, the gear ratio of the first to third speed drive gears may be designed in such a manner that the existing first forward/reverse speed and the existing second forward/reverse speed cover the first forward/reverse speed mode and the second forward/reverse speed mode, respectively, and the existing fourth forward/reverse speed covers the third forward/reverse speed mode.

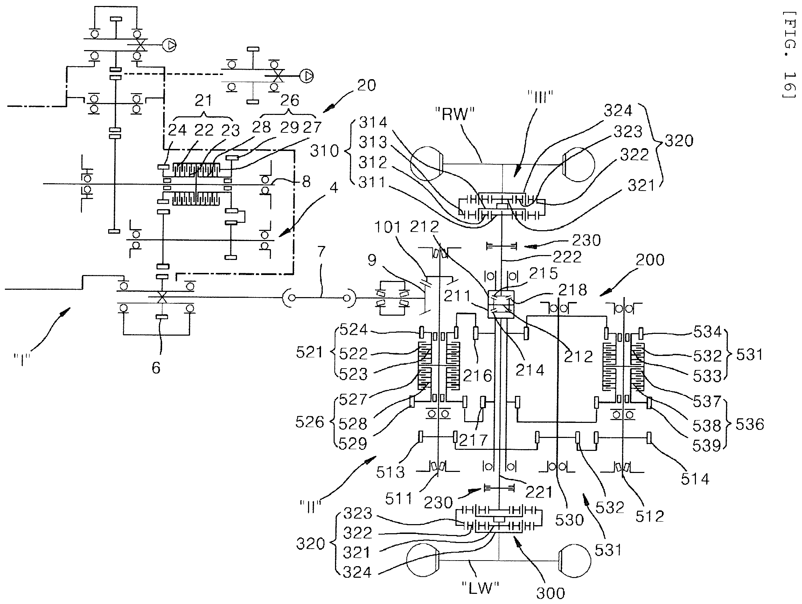

FIG. 16 is a configuration diagram illustrating a modification of the first transmission unit I in the power train system and the vehicle including the same according to the embodiment of the present disclosure.

In the second transmission unit II according to the example of FIG. 13 in the power train system and the vehicle including the same according to the present embodiment, which has been described with FIGS. 14 to 15E, the torque of the driving power generated by the power generator 1 is primarily increased through the torque converter 3 installed in the first transmission unit I, secondarily increased through the forward/reverse output unit 20 and the auxiliary gear part 5, tertiarily increased through the one multi-stage clutch pack 521 and 526 or the other multi-stage clutch pack 531 and 536 installed in the second transmission unit II, and finally increased by the double planetary gear set installed in the wheel driving unit III.

The torque increased through the four steps can sufficiently satisfy a torque required for an operation of a heavy equipment vehicle such as a forklift truck. This may be basically considered as one of effects which are obtained by the torque increase through the double planetary gear set of the reduction gear part 300 installed between the left and right axle shafts 220 and the left and right wheels LW and RW.

Therefore, as illustrated in FIG. 16, the modification of the first transmission unit I in the power train system and the vehicle including the same according to the present embodiment may be implemented in such a manner that the torque converter 3 installed between the power generator 1 and the forward/reverse output unit 20 of the first transmission unit I is omitted. This is because, when the reduction gear part 300 includes a double planetary gear set, a sufficient torque can be generated even though a separate torque converter is not installed in the first transmission unit I, and torque conversion does not need to be performed between the power generator 1 and the leading end of the forward/reverse output unit 20.

That is, the power train system and the vehicle including the same according to the present embodiment may include the first transmission unit I having the power generator 1 and the forward/reverse output unit 20 which is directly connected to the driving shaft of the power generator 1, receives a driving power of which the torque is not changed, outputs the driving power as a forward driving power or reverse driving power, and changes the output torque through a gear engagement with the auxiliary gear part 5.

According to the embodiments of the present disclosure, the power train system, the vehicle including the same and the control method thereof can accomplish the following effects.

First, since the connection portion to the bevel gear of the bevel gear part is flexibly set in the radial direction based on the axle shaft, the degree of freedom in design can be improved.

Second, a part of the components for the speed change function in the axle shaft can be installed on a separate shaft, which makes it possible to reduce the size of the product.

Third, since a part of the components for the speed change function can be separated from the axle shaft having a complex structure for the speed change function to the outside, precise gears may not be needed. Thus, the manufacturing cost of the product can be reduced.

Fourth, since the torque converter for increasing an output torque can be partially removed, the power train system can be easily applied to a heavy equipment vehicle.

Although the representative embodiments of the present disclosure have been disclosed in detail, those having ordinary skill in the field of technology to which the present disclosure pertains would understand that various modifications are possible, without departing from the scope of the present disclosure. Accordingly, the scope of the present disclosure should not be construed as being limited to the described embodiments but be defined by the appended claims as well as equivalents thereof.

## Claims

1. A power train system comprising:
a first transmission unit comprising a forward/reverse output unit which switches a driving power outputted from a power generator to any one of a forward driving power and a reverse driving power; and
a second transmission unit changing the forward or reverse driving power received from the first transmission unit to a specific speed among at least four rotation speeds,
wherein the second transmission unit comprises:
an axle output unit having an axle shaft disposed in a side-to-side direction so as to be connected to left and right wheels; and
an axle input unit having two or more shafts separated from an axle shaft of the axle output unit, receiving the driving power from a bevel gear part forming a bevel gear rotating shaft installed in a longitudinal direction of a vehicle body in order to supply the driving power switched to the forward or reverse driving power by the first transmission unit, and changing the received driving power to a specific speed among the four rotation speeds.

2. The power train system of claim 1, wherein the axle input unit comprises:
a drive-side axle input unit having a multi-stage driving shaft which is connected to the bevel gear part, separated from the axle shaft, and installed in parallel to the axle shaft, changing the driving power inputted as any one of the forward and reverse driving powers to two specific speeds among the four rotation speeds, and selectively outputting one of the changed driving powers; and
a driven-side axle input unit having a multi-stage driven shaft which is connected to the drive-side axle input unit, separated from the axle shaft and the multi-stage driving shaft, and installed in parallel to the axle shaft and the multi-stage driving shaft, changing the driving power inputted from the drive-side axle input unit to two specific speeds among the four rotation speeds, and selectively outputting one of the changed driving powers.

3. The power train system of claim 2, wherein the axle shaft comprises a left axle shaft connected to the left wheel of the left and right wheels and a right axle shaft connected to the right wheel of the left and right wheels, and
the axle output unit further comprises a differential gear part installed between the left and right axle shafts, and receiving the driving power changed by the drive-side or driven-side axle input unit.

4. The power train system of claim 2, wherein the drive-side axle input unit comprises one multi-stage clutch pack installed on the outer circumference of the multi-stage driving shaft, and selectively fixed to the multi-stage driving shaft to change the driving power to any one of the two specific speeds, depending on whether operation oil is supplied, and
the driven-side axle input unit comprises the other multi-stage clutch pack installed on the outer circumference of the multi-stage driven shaft, and selectively fixed to the multi-stage driven shaft to change the driving power to any one of the two specific speeds, depending on whether operation oil is supplied.

5. The power train system of claim 2, wherein the drive-side axle input unit comprises one multi-stage clutch pack which is installed on the outer circumference of the multi-stage driving shaft, fixed to the multi-stage drive shaft to change the driving power to any one of the two specific speeds, depending on whether operation oil is supplied, and connected to the axle output unit, and
the driven-side axle input unit comprises the other multi-stage clutch pack which is installed on the outer circumference of the multi-stage driven shaft, fixed to the multi-stage driven shaft to change the driving power to any one of the two specific speed, depending on whether operation oil is supplied, and connected to the axle output unit.

6. The power train system of claim 4 or 5, wherein the one multi-stage clutch pack comprises a second speed drive gear connected to one side of the axle output unit and changing the driving power to a second rotation speed among the four rotation speeds, and a fourth speed drive gear connected to the other side of the axle output unit and changing the driving power to a fourth rotation speed among the four rotation speeds, and
the other multi-stage clutch pack comprises a first speed drive gear connected to the one side of the axle output unit, to which the second speed drive gear is connected, and changing the driving power to a first rotation speed among the four rotation speeds, and a third speed drive gear connected to the other side of the axle output unit, to which the fourth speed drive gear is connected, and changing the driving power to a third rotation speed among the four rotation speeds.

7. The power train system of claim 4 or 5, wherein the axle output unit comprises a left differential gear case disposed closer to the left wheel between the left and right wheels and receiving the driving power from one side of the axle input unit, and a right differential gear case disposed closer to the right wheel between the left and right wheels and receiving the driving power from the other side of the axle input unit,
the one multi-stage clutch pack comprises a second speed drive gear engaged with one transfer gear installed in the right differential gear case and changing the driving power to a second rotation speed among the four rotation speeds, and a fourth speed drive gear engaged with the other transfer gear installed in the left differential gear case and changing the driving power to a fourth rotation speed among the four rotation speeds, and
the other multi-stage clutch pack comprises a first speed drive gear engaged with the one transfer gear and changing the driving power to a first rotation speed among the four rotation speeds, and a third speed drive gear engaged with the other transfer gear and changing the driving power to a third rotation speed among the four rotation speeds.

8. The power train system of claim 1, wherein the forward/reverse output unit of the first transmission unit comprises:
an output shaft directly connected to an output end of the power generator; and
forward and reverse speed clutch parts disposed on the outer circumference of the output shaft, fixed to the output shaft depending on whether operation oil is supplied, and outputting the forward or reverse driving power while being rotated in connection with the output shaft.

9. The power train system of claim 8, wherein the forward or reverse driving power of the first transmission unit is transferred to the second transmission unit through a propeller shaft having the bevel gear part installed at a leading end thereof, and
the first transmission unit further comprises a compensation gear part disposed between the output shaft and the propeller shaft and serving as a medium through the forward or reverse driving power is transferred.

10. The power train system of claim 8, wherein the forward or reverse driving power of the first transmission unit is transferred to the second transmission unit through a propeller shaft formed at a leading end of the bevel gear part, and
the output shaft and the propeller shaft are directly connected to each other on one axis.

11. The power train system of claim 9 or 10, wherein the multi-stage driving shaft comprises a beveling gear engaged with a bevel gear installed in the bevel gear part, and
an installation position of the beveling gear on the multi-stage driving shaft is designed in a different manner when the first transmission unit further includes the compensation gear part or the output shaft and the propeller shaft are directly connected to each other on one axis.

12. The power train system of claim 9 or 10, further comprising a reduction gear part installed at the front end of each of the left and right wheels, and increasing an output torque by reducing the driving power supplied from the axle output unit,
wherein when the reduction gear part includes a double planetary gear set, torque conversion is not performed between the power generator and the front end of the forward/reverse output unit.

13. A vehicle including a power train system comprising:
a first transmission unit comprising a forward/reverse output unit which switches a driving power outputted from a power generator to any one of a forward driving power and a reverse driving power; and
a second transmission unit changing the forward or reverse driving power received from the first transmission unit to a specific speed among at least four rotation speeds,
wherein the second transmission unit comprises:
an axle output unit having an axle shaft disposed in a side-to-side direction so as to be connected to left and right wheels; and
an axle input unit having two or more shafts separated from an axle shaft of the axle output unit, receiving the driving power from a bevel gear part forming a bevel gear rotating shaft installed in a longitudinal direction of a vehicle body in order to supply the driving power switched to the forward or reverse driving power by the first transmission unit, and changing the received driving power to a specific speed among the four rotation speeds.
